# EUROPÄISCHE PATENTSCHRIFT

(11) **EP 4 487 018 B1**
(45) Veröffentlichungstag und Bekanntmachung des Hinweises auf die Patenterteilung: **07.10.2026**
(21) Anmeldenummer: 22835695.2
(22) Anmeldetag: 12.12.2022
(51) Int. Cl.: F16B 21/02, B62J 9/27, B62J 11/00, B62J 7/08

(54) **VERSCHLUSSVORRICHTUNG ZUM VERBINDEN ZWEIER BAUGRUPPEN**
CLOSURE DEVICE FOR CONNECTING TWO ASSEMBLIES
DISPOSITIF DE FERMETURE POUR RELIER DEUX ENSEMBLES

(30) Priorität: 28.02.2022 DE 102022104734
(43) Veröffentlichungstag der Anmeldung: 08.01.2025
(73) Patentinhaber: Fidlock GmbH, 30659 Hannover (DE)
(72) Erfinder: HÜWEL, Florian, 30449 Hannover (DE); FIEDLER, Joachim, 30519 Hannover (DE)
(74) Vertreter: Maikowski & Ninnemann Patentanwälte Partnerschaft mbB
(86) Internationale Anmeldenummer: PCT/EP2022/085407
(87) Internationale Veröffentlichungsnummer: WO 2023/160853

(56) Entgegenhaltungen:
- EP-B1- 2 640 604
- WO-A1-2010/084191
- DE-A1- 102019 215 277
- US-B2- 10 703 429

## Beschreibung

Die Erfindung betrifft eine Verschlussvorrichtung zum Verbinden zweier Baugruppen miteinander.

Eine derartige Verschlussvorrichtung umfasst ein einer ersten der Baugruppen zugeordnetes, erstes Verschlussteil, das ein Gehäuseteil, zumindest einen ersten Eingriffsvorsprung und ein an dem Gehäuseteil verstellbar angeordnetes Verstellelement aufweist. Die Verschlussvorrichtung umfasst zudem ein einer zweiten der Baugruppen zugeordnetes, zweites Verschlussteil, das ein Eingriffselement mit zumindest einem zweiten Eingriffsvorsprung aufweist. Das erste Verschlussteil und das zweite Verschlussteil sind zum Schließen der Verschlussvorrichtung entlang einer Schließrichtung aneinander ansetzbar. In einer Schließstellung steht der zumindest eine erste Eingriffsvorsprung mit dem zumindest einen zweiten Eingriffsvorsprung zum Halten des ersten Verschlussteils und des zweiten Verschlussteils entgegen der Schließrichtung aneinander in Eingriff. Zum Öffnen der Verschlussvorrichtung sind das erste Verschlussteil und das zweite Verschlussteile voneinander trennbar.

Über eine solche Verschlussvorrichtung soll, in der Schließstellung, ein zuverlässiger, fester, belastbarer Halt der Verschlussteile aneinander hergestellt werden, um die den Verschlussteilen zugeordneten Baugruppen miteinander zu verbinden und mechanisch aneinander zu halten. Die Verschlussvorrichtung soll hierbei einfach zu handhaben sein, indem die Verschlussvorrichtung komfortabel geschlossen und auch komfortabel wieder geöffnet werden kann.

Eine solche Verschlussvorrichtung kann beispielsweise an einem Fahrzeug, zum Beispiel einem Kraftfahrzeug oder einem Fahrrad, verwendet werden, um Baugruppen miteinander zu verbinden. Beispielsweise kann eine solche Verschlussvorrichtung dazu dienen, eine Baugruppe an einem Fahrradrahmen anzubringen.

Bei der Verschlussvorrichtung ist wünschenswert, dass in der Schließstellung Verschlussteile vibrationssicher und klapperfrei aneinander gehalten sind, wobei zu bedenken ist, dass mechanische Fertigungstoleranzen bestehen können. Im Betrieb soll für ein gesteigertes Nutzerempfinden eine feste, im Wesentlichen spielfreie Verbindung der Verschlussteile zueinander geschaffen sein.

Bei einer aus der DE 10 2018 123 026 A1 bekannten Verschlussvorrichtung werden Verschlussteilen an Verschlusselemente, die an einem Grundkörper angeordnet sind, angesetzt, um die Verschlussvorrichtung zu schließen. An den Verschlusselementen und den Verschlussteilen sind Sperrabschnitte angeordnet, die in der Schließstellung der Verschlussvorrichtung mechanisch miteinander in Eingriff stehen und eine formschlüssige Verbindung herstellen. Die Verschlussvorrichtung der DE 10 2018 123 026 A1 verwirklicht beispielsweise einen Verschluss für Gurte eines Kinderwagens oder eines Kindersitzes.

Die WO 2020/216955 A1 beschreibt eine Verschlussvorrichtung zum Verbinden von zwei Baugruppen miteinander, die ein erstes Verschlussteil mit einem Sperrstück und einem ersten Magnetelement und ein zweites Verschlussteil mit einer Sperraufnahme und einem zweiten Magnetelement aufweist. Zusätzlich weist die Verschlussvorrichtung einen an dem zweiten Verschlussteil angeordneten Verriegelungsmechanismus auf, der ein Verrieglungselement und einen mit dem Verriegelungselement wirkverbundenen Betätigungsmechanismus aufweist, wobei das Verriegelungselement in einer Schließstellung mit dem Sperrstück in Wirkverbindung bringbar ist, um einen formschlüssigen Eingriff zwischen Sperrabschnitten des ersten Verschlussteils und des zweiten Verschlussteils zu sperren.

Die WO 2010/084191 A1 beschreibt eine Verschlussvorrichtung, bei der ein Verbindungsmodul mit einem Sperrstück an ein Federverrieglungselement eines weiteren Verbindungsmoduls ansetzbar ist. Das Federverrieglungselement ist hierbei drehbar an dem weiteren Verbindungsmodul angeordnet derart, dass durch Verdrehen des Federverrieglungselements ein Öffnen der Verschlussvorrichtung gesperrt werden kann. Die DE 10 2019 215 277 A1 beschreibt eine Verschlussvorrichtung, bei der ein erstes Verschlussteil ein Verriegelungselement aufweist, das durch Verdrehen eines Wirkelements außer Eingriff von einem Eingriffsabschnitt eines zweiten Verschlussteils gebracht werden kann.

Aufgabe der vorliegenden Erfindung ist es, eine Verschlussvorrichtung zur Verfügung zu stellen, die einfach handhabbar ist und in einer Schließstellung einen zuverlässigen, belastbaren, möglichst spielfreien Halt der Verschlussteile aneinander ermöglicht.

Diese Aufgabe wird durch einen Gegenstand mit den Merkmalen des Anspruchs 1 und des Anspruchs 15 gelöst.

Demnach ist das Verstellelement zwischen einer ersten Stellung und einer zweiten Stellung verstellbar an dem Gehäuseteil des ersten Verschlussteils angeordnet, wobei das Verstellelement ausgebildet ist, in der ersten Stellung ein Ansetzen des ersten Verschlussteils und des zweiten Verschlussteils zum Schließen der Verschlussvorrichtung entlang der Schließrichtung aneinander zu ermöglichen, wobei das Verstellelement, wenn das erste Verschlussteil und das zweite Verschlussteil aneinander angesetzt sind, aus der ersten Stellung in die zweite Stellung überführbar ist, um in der zweiten Stellung eine Vorspannkraft entlang der Schließrichtung auf das Eingriffselement auszuüben.

Die Verschlussvorrichtung weist zwei Verschlussteile auf, die zum Schließen der Verschlussvorrichtung entlang der Schließrichtung aneinander ansetzbar sind. Die Verschlussvorrichtung kann hierbei als rein mechanische Verschlussvorrichtung ausgebildet sein, bei der die Verschlussteile in der Schließstellung mechanisch durch mechanischen Eingriff der Verschlussteile aneinander gehalten sind. Die Verschlussvorrichtung kann aber auch als mechanisch-magnetische Verschlussvorrichtung ausgebildet sein, bei der die Verschlussteile zum Schließen entlang der Schließrichtung magnetisch zueinander hin gezogen werden und in der Schließstellung vorzugsweise sowohl mechanisch als auch magnetisch aneinandergehalten sind.

Das erste Verschlussteil weist ein Gehäuseteil, zumindest einen ersten Eingriffsvorsprung und ein an dem Gehäuseteil verstellbar angeordnetes Verstellelement auf. Das zweite Verschlussteil weist demgegenüber ein Eingriffselement mit zumindest einem zweiten Eingriffsvorsprung auf. In der Schließstellung stehen die Eingriffsvorsprünge derart miteinander in Eingriff, dass die Verschlussteile entgegen der Schließrichtung aneinander gehalten sind.

Das Verstellelement des ersten Verschlussteils ist hierbei an dem Gehäuseteil verstellbar und dient dazu, in einer zweiten Stellung eine Vorspannungskraft entlang der Schließrichtung auf das Eingriffselement auszuüben. Das Verstellelement kann an dem Gehäuseteil in eine erste Stellung gebracht werden, in der ein Ansetzen der Verschlussteile aneinander möglich ist. Sind die Verschlussteile aneinander angesetzt worden, so kann das Verstellelement an dem ersten Verschlussteil verstellt werden, um dadurch eine Vorspannungskraft zwischen den Verschlussteilen zu bewirken, die entlang der Schließrichtung wirkt und somit die Verschlussteile entlang der Schließrichtung zueinander vorspannt.

Durch das Bereitstellen einer Vorspannungskraft kann ein im Wesentlichen spielfreier, klapperfreier Halt der Verschlussteile in der Schließstellung aneinander bewirkt werden.

So kann dadurch, dass die Verschlussteile über das Verstellelement in der zweiten Stellung entlang der Schließrichtung zueinander vorgespannt sind, bewirkt werden, dass ein axiales, entlang der Schließrichtung gerichtetes Spiel, das zum Beispiel durch Fertigungstoleranzen bedingt ist, ausgeglichen wird und die Verschlussteile entlang der Schließrichtung fest und im Wesentlichen spielfrei aneinandergehalten sind. Im Betrieb der Verschlussvorrichtung kann auf diese Weise der Halt der Verschlussteile aneinander verbessert sein, wobei insbesondere eine Vibrationsanfälligkeit unterdrückt sein kann.

Das Verstellen des Verstellelements aus der ersten Stellung in die zweite Stellung kann zum Beispiel händisch durch einen Nutzer erfolgen. Beim Schließen der Verschlussvorrichtung befindet sich das Verstellelement an dem ersten Verschlussteil vorzugsweise in der ersten Stellung. Sind die Verschlussteile aneinander angesetzt worden, überführt der Nutzer das Verstellelement aus der ersten Stellung in die zweite Stellung, um dadurch die Verschlussteile entlang der Schließrichtung zueinander vorzuspannen. Es ergibt sich ein zweistufiger Schließprozess, bei der die Verschlussteile durch den Nutzer zunächst aneinander angesetzt werden und, nach dem Ansetzen, das Verstellelement an dem ersten Verschlussteil verstellt wird, um die Verbindung zwischen den Verschlussteilen zu komplettieren.

Das Verstellen des Verstellelements aus der ersten Stellung in die zweite Stellung kann aber auch zum Beispiel automatisch erfolgen, indem das Verstellelement beispielsweise an dem Gehäuseteil des ersten Verschlussteils in Richtung der zweiten Stellung federvorgespannt ist und bei Ansetzen der Verschlussteile aneinander das Verstellelement so freigegeben wird, dass sich das Verstellelement selbsttätig aus der ersten Stellung in die zweite Stellung bewegt.

In einer Ausgestaltung ist der zumindest eine erste Eingriffsvorsprung an dem Verstellelement angeordnet und gemeinsam mit dem Verstellelement relativ zu dem Gehäuseteil verstellbar. Die Verbindung zwischen den Verschlussteilen wird somit durch Eingriff der Eingriffsvorsprünge an dem Verstellelement des ersten Verschlussteils einerseits und an dem Eingriffselement des zweiten Verschlussteils andererseits hergestellt. Bei Bewegen des Verstellelements an dem Gehäuseteil des ersten Verschlussteils wird der zumindest eine erste Eingriffsvorsprung gemeinsam mit dem Verstellelement bewegt, wobei über den Eingriff der Eingriffsvorsprünge hierbei zum Beispiel auch eine Vorspannkraft in das Eingriffselement des zweiten Verschlussteils eingeleitet werden kann.

In anderer Ausgestaltung ist aber auch möglich, dass der zumindest eine erste Eingriffsvorsprung an dem Gehäuseteil geformt ist und somit nicht an dem Verstellelement angeordnet ist. Durch Verstellen des Verstellelements kann hierbei beispielsweise bewirkt werden, dass das Eingriffselement des zweiten Verschlussteils mit dem daran angeordneten, zumindest einen zweiten Eingangsvorsprung in Eingriff mit dem ersten Eingriffsvorsprung am Gehäuseteil des ersten Verschlussteils gebracht wird.

In einer Ausgestaltung weist das Verstellelement eine Basis und einen starr an der Basis geformten, entlang der Schließrichtung von der Basis vorstehenden Bundabschnitt auf. Die Basis bildet einen Körper des Verstellelements aus und kann beispielsweise eine im Wesentlichen senkrecht zur Schließrichtung erstreckte Fläche bereitstellen, die eine Anlagefläche für das Eingriffselement des zweiten Verschlussteils in der Schließstellung bereitstellt. Der Bundabschnitt steht entlang der Schließrichtung von der Basis vor und kann zum Beispiel eine umfänglich geschlossenen oder auch umfänglich nach Art eines C-Rings geöffnete Wandung an der Basis bereitstellen, innerhalb derer das Eingriffselement des zweiten Verschlussteils in der Schließstellung aufgenommen ist.

Über den Bundabschnitt kann eine Aufnahme für das Eingriffselement geschaffen werden. Über den Bundabschnitt kann in der zweiten Stellung des Verstellelements zum Beispiel ein Öffnen der Verschlussvorrichtung durch eine Relativbewegung der Verschlussteile in einer zur Schließrichtung senkrechten Ebene gesperrt sein, sodass über das Verstellelement in der zweiten Stellung ein Öffnen der Verschlussvorrichtung verhindert ist und die Verschlussvorrichtung erst geöffnet werden kann, wenn das Verstellelement an dem ersten Verschlussteil zurück in die erste Stellung bewegt worden ist.

Das Eingriffselement des zweiten Verschlussteils ist beispielsweise durch einen starren Zapfen geformt. Der zumindest eine zweite Eingriffsvorsprung steht hierbei radial von dem Zapfen vor, um in der Schließstellung durch Eingriff mit dem zumindest einen ersten Eingriffsvorsprung des ersten Verschlussteils eine Verbindung zwischen den Verschlussteilen herzustellen.

In einer Ausgestaltung ist der zumindest eine erste Eingriffsvorsprung an dem Bundabschnitt angeordnet. Der Eingriffsvorsprung ist hierbei vorzugsweise starr an dem Bundabschnitt geformt. Der Bundabschnitt ist dabei ebenfalls starr ausgebildet und mit der starren Basis verbunden, sodass das Verstellelement insgesamt als im Wesentlichen starres, bei bestimmungsgemäßer Belastung nicht elastisch verformbares Teil ausgebildet ist.

Der zumindest eine erste Eingriffsvorsprung steht, in einer Ausgestaltung, quer zur Schließrichtung von dem Bundabschnitt vor und ragt dabei vorzugsweise radial nach innen, um in der Schließstellung über den Eingriff mit dem zumindest einen zweiten Eingriffsvorsprung des Eingriffselements des zweiten Verschlussteils eine Verbindung zwischen den Verschlussteilen herzustellen.

Der zumindest eine erste Eingriffsvorsprung und der zumindest eine zweite Eingriffsvorsprung bilden vorzugsweise jeweils einen Hinterschnitt aus. Der Hinterschnitt wird hierbei nicht notwendigerweise durch zur Schließrichtung senkrecht gerichtet Flächen ausgebildet. Flächen des Hinterschnitts können vielmehr auch schräg zur Schließrichtung erstreckt sein. Der Hinterschnitt des jeweiligen Eingriffsvorsprungs wird dadurch ausgebildet, dass der Eingriffsvorsprung quer zur Schließrichtung vorspringt und durch Eingriff der Eingriffsvorsprünge ineinander eine Bewegung der Verschlussteile entlang der Schließrichtung gesperrt ist, sodass die Verschlussteile in der Schließstellung der Verschlussvorrichtung - gegebenenfalls unter zusätzlicher Sperrwirkung eines Sperrelements -entlang der Schließrichtung aneinandergehalten sind.

Der zumindest eine erste Eingriffsvorsprung und der zumindest eine zweite Eingriffsvorsprung stehen in der Schließstellung vorzugsweise formschlüssig miteinander in Eingriff. Das Halten der Verschlussteile aneinander wird somit aufgrund der Form der Eingriffsvorsprünge bewirkt. Die formschlüssige Verbindung kann hierbei allein über die Eingriffsvorsprünge hergestellt werden. In anderer Ausgestaltung kann die formschlüssige Verbindung aber auch durch Eingriff der Eingriffsvorsprünge und eine zusätzliche Sperrwirkung, zum Beispiel über das Verstellelement, bewirkt werden derart, dass die Eingriffsvorsprünge nach Aufheben der Sperrwirkung entlang der Schließrichtung voneinander abgleiten können.

In einer Ausgestaltung sind das erste Verschlussteil und das zweite Verschlussteil zum Schließen der Verschlussvorrichtung ausschließlich in der ersten Stellung des Verstellelements aneinander ansetzbar. Das Verstellelement muss somit in die erste Stellung an dem ersten Verschlussteil gebracht werden, um ein Ansetzen der Verschlussteile aneinander zu ermöglichen. Durch Überführen des Verstellelements an dem ersten Verschlussteil aus der ersten Stellung in die zweite Stellung wird die Verbindung zwischen den Verschlussteilen dann komplettiert, indem über das Verstellelement in der zweiten Stellung eine Vorspannung zwischen den Verschlussteilen entlang der Schließrichtung bewirkt wird und vorzugsweise auch ein Öffnen der Verschlussvorrichtung gesperrt ist.

In anderer Ausgestaltung kann ein Ansetzen der Verschlussteile aber auch in der zweiten Stellung des Verstellelements möglich sein. In diesem Fall kann das Verstellelement beispielsweise ganz oder mit einem Abschnitt elastisch ausgebildet sein, um bei Ansetzen der Verschlussteile aneinander quer zur Schließrichtung auszuweichen und somit ein Ansetzen der Verschlussteile aneinander zu ermöglichen.

In einer Ausgestaltung ist das Verstellelement zwischen der ersten Stellung und der zweiten Stellung zu dem Gehäuseteil des ersten Verschlussteils verdrehbar. Das Verstellelement kann hierbei insbesondere um eine entlang der (parallel zur) Schließrichtung weisende Drehachse zu dem Gehäuseteil verdrehbar sein. In der ersten Stellung nimmt das Verstellelement eine erste Drehstellung an dem Gehäuseteil ein. In der zweiten Stellung ist das Verstellelement an dem Gehäuseteil verdreht, um in der zweiten Stellung eine Vorspannung zwischen den Verschlussteilen entlang der Schließrichtung zu bewirken.

In einer Ausgestaltung ist das Verstellelement axial an dem Gehäuseteil verstellbar. Das Verstellelement nimmt hierbei in der ersten Stellung eine erste Axialstellung zu dem Gehäuseteil und in der zweiten Stellung eine von der ersten Axialstellung unterschiedliche, entlang der Schließrichtung versetzte, zweite Axialstellung zu dem Gehäuseteil ein. Durch Verstellen des Verstellelements an dem Gehäuseteil wird das Verstellelement somit axial entlang der Schließrichtung an dem Gehäuseteil verstellt, um dadurch eine Vorspannung zwischen den Verschlussteilen zu bewirken. Durch axiales Verstellen des Verstellelements kann das Verstellelement beispielsweise eine Zugwirkung oder eine Druckwirkung an dem Eingriffselement des zweiten Verschlussteils entlang der Schließrichtung bewirken, um auf diese Weise eine Vorspannung zwischen den Verschlussteilen bereitzustellen.

Beispielsweise kann das Verstellelement eine Zugwirkung in die Schließrichtung an dem Eingriffselement bewirken. Steht zumindest ein an dem Verstellelement geformter, erster Eingriffsvorsprung mit dem zumindest einen zweiten Eingriffsvorsprung an dem Eingriffselement in Eingriff, so kann bei einer Axialverstellung des Verstellelements an dem Gehäuseteil des ersten Verschlussteils in die Schließrichtung eine Zugwirkung an dem Eingriffselement bewirkt werden, sodass das Eingriffselement (weiter) in die Schließrichtung in Eingriff mit einer zugeordneten Stecköffnung am Gehäuseteil des ersten Verschlussteils gezogen wird.

Alternativ kann eine Vorspannung auch entgegen der Schließrichtung an dem Eingriffselement bewirkt werden. Beispielsweise kann das Verstellelement eine Druckwirkung entgegen der Schließrichtung an dem Eingriffselement bewirken. Hierzu kann das Eingriffselement beispielsweise mit seiner Basis auf das Eingriffselement drücken. Wird das Eingriffselement bei einem Verstellen aus der ersten Stellung in die zweite Stellung axial entgegen der Schließrichtung an dem Gehäuseteil des ersten Verschlussteils verstellt, drückt das Eingriffselement mit seiner Basis auf das Eingriffselement und spannt dieses somit entgegen der Schließrichtung relativ zu dem Gehäuseteil vor.

In einer Ausgestaltung weist das erste Verschlussteil ein an dem Gehäuseteil angeordnetes Auflaufelement mit einem ersten Rahmenabschnitt und das Verstellelement einen Auflaufabschnitt mit einem zweiten Rahmenabschnitt auf. Der erste Rahmenabschnitt gleitet bei einem Verstellen des Verstellelements zum axialen Verstellen des Verstellelements an dem zweiten Rahmenabschnitt. Wird das Verstellelement an dem Gehäuseteil des ersten Verschlussteils verstellt, beispielsweise verdreht, so läuft das Verstellelement somit mit seinem Auflaufabschnitt auf das Auflaufelement an dem Gehäuseteil auf, sodass dadurch eine axiale Verstellung des Verstellelements an dem Gehäuseteil bewirkt wird, um auf diese Weise bei Überführen in die zweite Stellung eine axiale Vorspannung zwischen den Verschlussteilen zu bewirken.

Das Auflaufelement ist vorzugsweise drehfest mit dem Gehäuseteil verbunden. Das Auflaufelement kann einstückig an dem Gehäuseteil geformt sein oder als separates Element an das Gehäuseteil angesetzt sein, wobei das Auflaufelement bei einem Verstellen des Verstellelements relativ zu dem Gehäuseteil aber nicht in Verstellrichtung mit bewegt wird, sondern drehfest an dem Gehäuseteil verbleibt.

In einer Ausgestaltung weisen das erste Verschlussteil und/oder das zweite Verschlussteil ein entlang der Schließrichtung elastisch verformbares Elastizitätselement auf. Ist das Elastizitätselement an dem ersten Verschlussteil angeordnet, so ist über das Elastizitätselement das Auflaufelement beispielsweise entlang der Schließrichtung relativ zu dem Gehäuseteil abgestützt ist. Das Elastizitätselement wird hierbei bei einem Verstellen des Verstellelements elastisch verspannt, sodass dadurch eine elastische Vorspannkraft zwischen den Verschlussteilen bewirkt wird. Durch Überführen in die zweite Stellung kann das Verstellelement das Eingriffselement des zweiten Verschlussteils beispielsweise in die Schließrichtung in Richtung eines Eingriffs mit einem Steckplatz an dem ersten Verschlussteil belasten, wodurch das Elastizitätselement elastisch verformt und somit verspannt und dadurch eine elastische Vorspannkraft zwischen den Verschlussteilen bereitgestellt wird.

Das Elastizitätselement kann beispielsweise durch ein aus einem elastomeren Material geformtes Element, zum Beispiel in Form eines O-Rings ausgebildet sein. In anderer Ausgestaltung kann das Elastizitätselement zum Beispiel durch ein mechanisches Federelement, zum Beispiel hergestellt aus einem Federstahl oder einem Kunststoffmaterial, gebildet sein, zum Beispiel als Tellerfeder.

Das Elastizitätselement kann als gesondertes Element oder kann einstückig mit dem Auflaufelement oder dem Gehäuseteil oder auch mit einem Gehäuse des zweiten Verschlussteils ausgebildet sein.

In einer Ausgestaltung weist das erste Verschlussteil ein Betätigungselement auf, das betätigbar ist, um das Verstellelement zwischen der ersten Stellung und der zweiten Stellung zu verstellen. Das Betätigungselement kann beispielsweise linear entlang der Betätigungsrichtung zu dem Gehäuseteil bewegbar sein und ist somit nach Art eines Schiebers oder Drückers ausgebildet, der linear durch einen Nutzer verstellt werden kann. Über das Betätigungselement kann ein Verstellen des Verstellelements an dem Gehäuseteil bewirkt werden, indem ein Nutzer das Betätigungselement händisch betätigt und dadurch nach Ansetzen der Verschlussteile aneinander das Verstellelement aus der ersten Stellung in die zweite Stellung oder umgekehrt zum Lösen der Verschlussvorrichtung das Verstellelement aus der zweiten Stellung in die erste Stellung überführt.

In einer Ausgestaltung weist das erste Verschlussteil ein mit dem Verstellelement wirkverbundenes Antriebselement auf, das ausgebildet ist, bei Betätigung eine Verstellkraft in das Verstellelement einzuleiten. Das Antriebselement kann zusätzlich zu dem Betätigungselement vorgesehen sein. Das Antriebselement kann aber auch ohne ein zusätzliches Betätigungselement vorgesehen und durch einen Nutzer zum Beispiel händisch zu betätigen sein, indem ein Nutzer an dem Antriebselement angreifen kann, um dadurch eine Verstellkraft in das Verstellelement einzuleiten, insbesondere um das Verstellelement aus der ersten Stellung in die zweite Stellung oder umgekehrt aus der zweiten Stellung in die erste Stellung zu überführen.

Das Antriebselement kann beispielsweise drehbar an dem Gehäuseteil des ersten Verschlussteils angeordnet sein. Das Antriebselement kann beispielsweise nach Art eines Zahnrads ausgebildet sein, das mit dem Verstellelement in Verzahnungseingriff steht, sodass eine Drehbewegung des Antriebselements in das Verstellelement eingeleitet wird und dadurch das Verstellelement zwischen der ersten Stellung und der zweiten Stellung bewegt wird.

In einer Ausgestaltung weist das Antriebselement einen ersten Verzahnungsabschnitt auf, der mit einem Verzahnungsabschnitt des Betätigungselements in Verzahnungseingriff steht. In diesem Fall ist somit ein zusätzliches Betätigungselement vorgesehen, das betätigt werden kann, um das Antriebselement zu verstellen. Das Betätigungselement steht mit dem Antriebselement in Verzahnungseingriff, sodass bei einer (linearen) Bewegung des Betätigungselements das Antriebselement an dem Gehäuseteil verdreht wird.

In einer Ausgestaltung weist das Antriebselement - zusätzlich oder alternativ zu dem ersten Verzahnungsabschnitt - einen zweiten Verzahnungsabschnitt auf, der mit einem Verzahnungsabschnitt des Verstellelements in Verzahnungseingriff steht. Eine Verstellkraft wird somit über den Verzahnungseingriff des zweiten Verzahnungsabschnitts mit dem Verzahnungsabschnitt des Verstellelements in das Verstellelement eingeleitet, sodass bei einer (Dreh-)Bewegung des Antriebselements das Verstellelement an dem Gehäuseteil verstellt wird.

An dem Betätigungselement und/oder an dem Antriebselement kann eine Zustandsanzeige angeordnet sein, die einem Nutzer anzeigt, in welcher Stellung sich das Verstellelement befindet. Anhand der Zustandsanzeige kann ein Nutzer somit unmittelbar erkennen, ob das Verstellelement aus der ersten Stellung in die zweite Stellung zum Schließen der Verschlussvorrichtung überführt worden ist und das Schließen der Verschlussvorrichtung somit komplettiert worden ist. Die Zustandsanzeige kann beispielsweise durch eine farbliche oder eine andere Markierung an dem Betätigungselement oder dem Antriebselement vorgesehen sein.

Beispielsweise kann einem Nutzer bei einer Stellung des Betätigungselements, die der ersten Stellung des Verstellelements zugeordnet ist, eine farbliche (z.B. rote) Markierung angezeigt werden. Nach Betätigung des Betätigungselements zum Überführen des Verstellelements in die zweite Stellung ist die Markierung demgegenüber nicht mehr sichtbar, sodass ein Nutzer unmittelbar erkennen kann, dass das Schließen der Verschlussvorrichtung richtig erfolgt und abgeschlossen ist.

Nach einem Aspekt weist das Gehäuseteil eine Stecköffnung auf, in die das Eingriffselement des zweiten Verschlussteils entlang der Schließrichtung zum Schließen der Verschlussvorrichtung eingesetzt werden kann. Die Stecköffnung definiert einen Steckplatz zum Aufnehmen des Eingriffselements des zweiten Verschlussteils. Bei Ansetzen der Verschlussteile aneinander gelangt das Eingriffselement des zweiten Verschlussteils in Eingriff mit der Stecköffnung am Gehäuseteil des ersten Verschlussteils, wodurch die Eingriffsvorsprünge miteinander in Eingriff gelangen und somit eine Verbindung zwischen den Verschlussteilen hergestellt wird.

Das Schließen der Verschlussvorrichtung erfolgt grundsätzlich durch Ansetzen der Verschlussteile entlang der Schließrichtung aneinander, wobei ein Ansetzen der Verschlussteile auch in einer von der Schließrichtung abweichenden Richtung, zum Beispiel entlang einer zur Schließrichtung schräg erstreckten Richtung, möglich sein kann. Bei magnetisch ausgebildeter Verschlussvorrichtung wirkt eine magnetische Anziehungskraft zwischen den Verschlussteilen im Wesentlichen entlang der Schließrichtung, sodass die Verschlussteile entlang der Schließrichtung zueinander hin gezogen werden.

Das Öffnen der Verschlussvorrichtung kann durch Entfernen der Verschlussteile entgegen der Schließrichtung voneinander erfolgen. In anderer Ausgestaltung kann das Öffnen der Verschlussvorrichtung aber auch durch eine Relativbewegung der Verschlussteile in einer senkrecht zur Schließrichtung gerichteten Ebene erfolgen.

In einer Ausgestaltung ist die Stecköffnung durch eine Ausgangsöffnung in eine quer zur Schließrichtung gerichtete Öffnungsrichtung geöffnet. Das Eingriffselement ist hierbei in der ersten Stellung des Verstellelements in die Öffnungsrichtung zum Öffnen der Verschlussvorrichtung aus der Stecköffnung heraus bewegbar. In der zweiten Stellung versperrt das Verstellelement demgegenüber, in einer Ausgestaltung, die Ausgangsöffnung derart, dass das Eingriffselement nicht in die Öffnungsrichtung zum Öffnen der Verschlussvorrichtung aus der Stecköffnung bewegbar ist. Bei dieser Ausgestaltung erfolgt das Öffnen der Verschlussvorrichtung somit durch Relativbewegung der Verschlussteile in einer zur Schließrichtung senkrechten Ebene, beispielsweise durch Verschieben oder Verdrehen der Verschlussteile relativ zueinander. Das Verstellelement dient hierbei beispielsweise dazu, die Ausgangsöffnung zu sperren, wenn sich das Verstellelement in der zweiten Stellung an dem Gehäuseteil des ersten Verschlussteils befindet, sodass bei in der zweiten Stellung befindlichem Verstellelement die Verschlussvorrichtung nicht geöffnet werden kann. Erst wenn ein Nutzer das Verstellelement aus der zweiten Stellung in die erste Stellung überführt, kann die Verbindung zwischen den Verschlussteilen aufgehoben werden, indem das Eingriffselement des zweiten Verschlussteils in die quer zur Schließrichtung gerichtete Öffnungsrichtung aus der Stecköffnung des ersten Verschlussteils heraus bewegt wird.

Weist das erste Verschlussteil zwei Stecköffnungen mit jeweils einem zugeordneten Verstellelement und somit zwei Steckplätze auf, an denen zwei Eingriffselemente des zweiten Verschlussteils aufgenommen werden können, so können die Ausgangsöffnungen die Stecköffnungen in unterschiedliche Richtungen, insbesondere in entgegengesetzte Richtungen öffnen, sodass eins der Eingriffselemente in eine erste Richtung aus der zugeordneten Stecköffnung und das andere der Eingriffselemente in eine entgegengesetzte, zweite Richtung aus der anderen Stecköffnung zu entfernen ist, um die Verschlussvorrichtung zu öffnen. Durch eine solche Orientierung der Ausgangsöffnungen kann ein Öffnen der Verschlussvorrichtung beispielsweise durch Verdrehen der Verschlussteile um eine zentrale Drehachse relativ zueinander ermöglicht werden.

Weist das erste Verschlussteil zwei Stecköffnungen mit jeweils einem zugeordneten Verstellelement und somit zwei Steckplätze auf, an denen zwei Eingriffselemente des zweiten Verschlussteils aufgenommen werden können, so können die Ausgangsöffnungen die Stecköffnungen aber alternativ auch in die gleiche Richtung öffnen, sodass die Eingriffselemente parallel zueinander in eine gemeinsame Öffnungsrichtung aus den zugeordneten Stecköffnungen geschoben werden können. In diesem Fall werden zum Öffnen der Verschlussvorrichtung die Verschlussteile somit parallel zueinander verschoben (und nicht zueinander verdreht).

In einer Ausgestaltung weist die Stecköffnung ein Zentrum auf. Das Verstellelement ist beispielsweise um eine zu dem Zentrum der Stecköffnung exzentrische Drehachse zwischen der ersten Stellung und der zweiten Stellung zu dem Gehäuseteil des ersten Verschlussteils verdrehbar, wobei das Verstellelement ausgebildet ist, in der zweiten Stellung den Eingriff zwischen dem zumindest einen ersten Eingangsvorsprung und dem zumindest einen zweiten Eingriffsvorsprung zum Halten des ersten Verschlussteils und des zweiten Verschlussteils entgegen der Schließrichtung aneinander herzustellen. Das Verstellelement ist damit exzentrisch zu der Stecköffnung am Gehäuseteil des ersten Verschlussteils verdrehbar. Das Verstellelement ist hierbei dazu ausgebildet, in der ersten Stellung ein Ansetzen der Verschlussteile entlang der Schließrichtung aneinander zu ermöglichen. In der zweiten Stellung ist das Verstellelement derart an dem Gehäuseteil verdreht, dass der Eingriff zwischen den Eingriffsvorsprüngen hergestellt ist und die Verschlussteile somit entlang der Schließrichtung aneinander gehalten werden.

Bei dieser Ausgestaltung kann der zumindest eine erste Eingriffsvorsprung an dem Verstellelement, zum Beispiel an einem Bundabschnitt des Verstellelements, angeordnet sein. Der zumindest eine erste Eingriffsvorsprung kann aber auch zum Beispiel an dem Gehäuseteil angeordnet sein, wobei bei Verdrehen des Verstellelements in die zweite Stellung das Eingriffselement des zweiten Verschlussteils mit dem daran angeordneten, zumindest einen zweiten Eingriffsvorsprung in Eingriff mit dem zumindest einen ersten Eingriffsvorsprung am Gehäuseteil des ersten Verschlussteils bewegt wird.

Das Gehäuseteil kann hierbei eine Lageröffnung zum drehbaren Lagern des Verstellelements an dem Gehäuseteil um die Drehachse aufweisen. In der Lageröffnung ist das Verstellelement aufgenommen und um die zugeordnete, zum Zentrum der Stecköffnung exzentrische Drehachse an dem Gehäuseteil verdrehbar.

Über das exzentrisch verstellbare Verstellelement wird die Verbindung zwischen den Verschlussteilen hergestellt. Ist der zumindest eine erste Eingriffsvorsprung an dem Verstellelement angeordnet, zum Beispiel an einem mit einer Basis verbundenen Bundabschnitt des Verstellelements, so ist der zumindest eine erste Eingriffsvorsprung - in einer Ausgestaltung - in der ersten Stellung, betrachtet entlang einer zur Drehachse senkrechten Ebene, außerhalb der Stecköffnung angeordnet. In der ersten Stellung wird somit ein Einsetzen des Eingriffselements des zweiten Verschlussteils in die Stecköffnung des ersten Verschlussteils ermöglicht. In der zweiten Stellung ragt der zumindest eine erste Eingriffsvorsprung demgegenüber in den Bereich der Stecköffnung hinein und steht dadurch in Eingriff mit dem zumindest einen zweiten Eingriffsvorsprung am Eingriffselement des zweiten Verschlussteils, sodass in der zweiten Stellung die Verschlussteile entlang der Schließrichtung aneinander gehalten sind. Durch das exzentrische Verdrehen des Verstellelements am Gehäuseteil des ersten Verschlussteils wird der Eingriffsvorsprung somit relativ zu der Stecköffnung bewegt, um in der ersten Stellung des Verstellelements ein Einsetzen des Eingriffselements des zweiten Verschlussteils in die Stecköffnung zu ermöglichen, in der zweiten Stellung hingegen durch Hineinragen in den Bereich der Stecköffnung den Eingriff zwischen den Verschlussteilen herzustellen und somit die Verschlussteile zueinander festzulegen.

Die Verschlussvorrichtung kann als rein mechanische Verschlussvorrichtung ausgebildet sein. Die Verschlussvorrichtung kann aber auch als mechanisch-magnetische Verschlussvorrichtung mit magnetischen Elementen ausgestaltet sein.

In einer Ausgestaltung weist das erste Verschlussteil ein erstes magnetisches Element und das zweite Verschlussteil ein zweites magnetisches Element auf, wobei das erste magnetisches Element und das zweite magnetisches Element magnetisch anziehend zusammenwirken, um das Ansetzen des ersten Verschlussteils und des zweiten Verschlussteils zum Schließen der Verschlussvorrichtung entlang der Schließrichtung magnetisch zu unterstützen. Die magnetischen Elemente wirken magnetisch anziehend entlang der Schließrichtung und ziehen die Verschlussteile beim Ansetzen somit entlang der Schließrichtung zueinander hin, sodass das Schließen der Verschlussvorrichtung magnetisch unterstützt wird.

Die magnetischen Elemente der Verschlussteile können jeweils durch einen Permanentmagneten ausgebildet sein. Alternativ kann eins der magnetischen Elemente durch einen Permanentmagneten und das andere der magnetischen Elemente durch einen ferromagnetischen Anker ausgebildet sein.

Das magnetische Element des ersten Verschlussteils kann an dem Gehäuseteil oder an dem Verstellelement angeordnet sein. Das magnetische Element des zweiten Verschlussteils kann beispielsweise an dem Eingriffselement des zweiten Verschlussteils angeordnet sein.

In einer Ausgestaltung weist das erste Verschlussteil zwei Steckplätze mit je zumindest einem ersten Eingriffsvorsprung und einem zu dem Gehäuseteil verstellbaren Verstellelement auf. Das zweite Verschlussteil weist demgegenüber zwei Eingriffselemente mit je zumindest einem zweiten Eingriffsvorsprung auf. Zum Schließen der Verschlussvorrichtung ist jedes der Eingriffselemente des zweiten Verschlussteils an einen der Steckplätze des ersten Verschlussteils ansetzbar. In der Schließstellung stehen die erste Eingriffsvorsprünge mit den zweiten Eingriffsvorsprüngen zum Halten des ersten Verschlussteils und des zweiten Verschlussteils entgegen der Schließrichtung aneinander in Eingriff. Es wird somit eine Verschlussvorrichtung mit (zumindest) zwei Steckplätzen an dem ersten Verschlussteil bereitgestellt, sodass eine Verbindung zwischen den Verschlussteilen durch Eingriff zweier Eingriffselemente des zweiten Verschlussteils an Steckplätzen des ersten Verschlussteils erfolgt.

Hierbei sind die Verstellelemente beispielsweise jeweils zwischen einer ersten Stellung und einer zweiten Stellung verstellbar an dem Gehäuseteil des ersten Verschlussteils angeordnet. Die Verstellelemente sind dazu ausgebildet, in der zweiten Stellung jeweils eine Vorspannkraft entlang der Schließrichtung auf ein zugeordnetes der Eingriffselemente auszuüben. Die Verstellelemente können beispielsweise jeweils verdrehbar an dem Gehäuseteil angeordnet sein. Über die Verstellelemente wird an den Eingriffselementen eine Vorspannung bewirkt, sodass die Verschlussteile entlang der Eingriffsrichtung zueinander vorgespannt werden.

In einer Ausgestaltung sind die Verstellelemente an den Steckplätzen des ersten Verschlussteils über einen Betätigungsmechanismus des ersten Verschlussteils gemeinsam und vorzugsweise synchron verstellbar. Der Betätigungsmechanismus kann beispielsweise ein Antriebselement, zum Beispiel in Form eines Zahnrads, aufweisen. Bei Betätigung des Antriebselements werden die Verstellelemente gemeinsam verstellt.

In anderer Ausgestaltung können die Verstellelemente auch unabhängig voneinander verstellbar sein, beispielsweise indem ein Nutzer an jedem Verstellelement unabhängig angreifen kann, um das jeweilige Verstellelement zu verstellen, ohne dass dabei das andere Verstellelement mit verstellt wird.

Nach einem weiteren Aspekt weist eines der Verschlussteile einen Lagerzapfen und das andere der Verschlussteile eine Eingriffsöffnung auf. In der Schließstellung greift der Lagerzapfen in die Eingriffsöffnung ein und lagert dadurch das erste Verschlussteil und das zweite Verschlussteil aneinander. Über den Eingriff des Lagerzapfen mit der Eingriffsöffnung kann hierbei eine Abstützung der Verschlussteile in einer zur Schließrichtung senkrechten Ebene bereitgestellt werden. Über den Eingriff kann zusätzlich eine drehende Lagerung der Verschlussteile aneinander hergestellt werden, sodass durch den Eingriff des Lagerzapfens in die Eingriffsöffnung die Verschlussteile um die Schließrichtung verschwenkbar zueinander gelagert sind. Zum Öffnen der Verschlussvorrichtung können die Verschlussteile um die durch den Lagerzapfen und die Eingriffsöffnung bereitgestellte Drehlagerung zueinander verschwenkt werden, um dadurch den zumindest einen ersten Eingriffsvorsprung des ersten Verschlussteils und den zumindest einen zweiten Eingangsvorsprung des zweiten Verschlussteils außer Eingriff voneinander zu bringen und somit die Verbindung zwischen den Verschlussteilen aufzuheben.

In einer Ausgestaltung ist in der zweiten Stellung des Verstellelements eine Schwenkbewegung des ersten Verschlussteils und des zweiten Verschlussteils um den Lagerzapfen gesperrt, sodass in der zweiten Stellung des Verstellelements die Verschlussteile nicht relativ zueinander verschwenkt werden können. In der zweiten Stellung des Verstellelements kann die Verschlussvorrichtung somit nicht geöffnet werden. Zum Öffnen der Verschlussvorrichtung muss das Verstellelement in die erste Stellung überführt werden, sodass ein Verschwenken der Verschlussteile um die Lagerung des Lagerzapfens in der Lageröffnung ermöglicht wird. In der ersten Stellung des Verstellelements können die Verschlussteile relativ zueinander (in einer zur Schließrichtung senkrechten Ebene) verschwenkt werden, um die Eingriffsvorsprünge außer Eingriff voneinander zu bringen und somit die Verbindung zwischen den Verschlussteilen aufzuheben.

In einer Ausgestaltung weisen das erste Verschlussteil eine erste elektrische Kontaktanordnung und das zweite Verschlussteil eine zweite elektrische Kontaktanordnung auf. Die erste elektrische Kontaktanordnung und die zweite elektrische Kontaktanordnung sind in der Schließstellung elektrisch kontaktierend miteinander in Wirkverbindung, sodass eine elektrische Verbindung zwischen den Kontaktanordnungen hergestellt ist, wenn sich die Verschlussvorrichtung in ihrer Schließstellung befindet.

Eine jede Kontaktanordnung kann einen, zwei oder mehr elektrische Kontakte aufweisen, zum Beispiel drei Kontakte, vier Kontakte oder sieben Kontakte oder auch eine andere Anzahl von Kontakten. Die Verschlussvorrichtung wirkt somit als elektrische Verschlussvorrichtung, über die in der Schließstellung eine elektrische Verbindung zwischen den zugeordneten Baugruppen hergestellt wird.

Die Verschlussvorrichtung kann zum Verbinden von zwei Baugruppen eines Fahrzeugs, zum Beispiel eines Kraftfahrzeugs oder eines Fahrrads, beispielsweise eines elektrischen Fahrrads (E-Bike), dienen.

Die Verschlussvorrichtung kann in einer Ausgestaltung zum Verbinden einer elektrischen Baugruppe mit einem elektrischen Fahrrad (E-Bike) ausgestaltet sein. Beispielsweise kann über die Verschlussvorrichtung eine Batteriebaugruppe, zum Beispiel in Form eines sogenannten Range Extenders, mit einem Fahrradrahmen eines Fahrrads verbunden werden.

Ein Fahrrad weist in einer Ausgestaltung eine Verschlussvorrichtung der vorangehend beschriebenen Art auf, wobei die Verschlussvorrichtung zum Verbinden einer Baugruppe mit einem Fahrradrahmen ausgestaltet ist. Die Baugruppe kann beispielsweise durch eine Batteriebaugruppe ausgestaltet sein.

Auch andere Anwendungen sind denkbar. Beispielsweise kann bei Verwendung der Verschlussvorrichtung an einem Fahrrad eine beliebige Baugruppe, zum Beispiel eine Schlossbaugruppe, ein Behälter, eine Trinkflasche oder ein Gepäckstück über die Verschlussvorrichtung mit einem Fahrradrahmen, einem Fahrradlenker oder einem Fahrradgepäckträger verbunden werden.

Der der Erfindung zugrunde liegende Gedanke soll nachfolgend anhand der in Figuren dargestellten Ausführungsbeispiele näher erläutert werden. Es zeigen:
- Fig. 1: eine perspektivische Explosionsansicht eines Ausführungsbeispiels einer Verschlussvorrichtung mit einem ersten Verschlussteil und einem entlang einer Schließrichtung mit dem ersten Verschlussteil verbindbaren, zweiten Verschlussteil;
- Fig. 2: eine andere Explosionsansicht der Verschlussvorrichtung;
- Fig. 3A: eine perspektivische Ansicht der Verschlussvorrichtung vor dem Schließen;
- Fig. 3B: eine frontale Ansicht der Anordnung gemäß Fig. 3A;
- Fig. 3C: eine Draufsicht auf die Anordnung gemäß Fig. 3A;
- Fig. 3D: eine Schnittansicht entlang der Linie A-A gemäß Fig. 3C;
- Fig. 3E: eine Seitenansicht der Anordnung gemäß Fig. 3A;
- Fig. 3F: eine Schnittansicht entlang der Linie B-B gemäß Fig. 3E;
- Fig. 3G: eine Draufsicht auf das erste Verschlussteil der Verschlussvorrichtung, in der Stellung gemäß Fig. 3A;
- Fig. 3H: eine Ansicht des ersten Verschlussteils von unten;
- Fig. 4A: eine perspektivische Ansicht der Verschlussvorrichtung beim Schließen;
- Fig. 4B: eine frontale Ansicht der Anordnung gemäß Fig. 4A;
- Fig. 4C: eine Draufsicht auf die Anordnung gemäß Fig. 4A;
- Fig. 4D: eine Seitenansicht der Anordnung gemäß Fig. 4A;
- Fig. 4E: eine Schnittansicht entlang der Linie A-A gemäß Fig. 4D;
- Fig. 4F: eine Schnittansicht entlang der Linie B-B gemäß Fig. 4D;
- Fig. 5A: eine perspektivische Ansicht der Verschlussvorrichtung, beim weiteren Schließen;
- Fig. 5B: eine frontale Ansicht der Anordnung gemäß Fig. 5A;
- Fig. 5C: eine Draufsicht auf die Anordnung gemäß Fig. 5A;
- Fig. 5D: eine Seitenansicht der Anordnung gemäß Fig. 5A;
- Fig. 5E: eine Schnittansicht entlang der Linie A-A gemäß Fig. 4D;
- Fig. 6A: eine perspektivische Ansicht der Verschlussvorrichtung, bei Betätigung von Verstellelementen des ersten Verschlussteils;
- Fig. 6B: eine frontale Ansicht der Anordnung gemäß Fig. 6A;
- Fig. 6C: eine Draufsicht auf die Anordnung gemäß Fig. 6A;
- Fig. 6D: eine Seitenansicht der Anordnung gemäß Fig. 6A;
- Fig. 6E: eine Draufsicht auf das erste Verschlussteil der Verschlussvorrichtung, in der Stellung gemäß Fig. 6A;
- Fig. 6F: eine Ansicht des ersten Verschlussteils von unten;
- Fig. 6G: eine Draufsicht auf die Anordnung gemäß Fig. 6A;
- Fig. 6H: eine Schnittansicht entlang der Linie A-A gemäß Fig. 6G;
- Fig. 7A: eine perspektivische Ansicht der Verschlussvorrichtung, in einer Schließstellung nach erfolgter Betätigung der Verstellelemente des ersten Verschlussteils;
- Fig. 7B: eine frontale Ansicht der Anordnung gemäß Fig. 7A;
- Fig. 7C: eine Draufsicht auf die Anordnung gemäß Fig. 7A;
- Fig. 7D: eine Schnittansicht entlang der Linie A-A gemäß Fig. 7C;
- Fig. 7E: eine Draufsicht auf das erste Verschlussteil;
- Fig. 8A: eine Ansicht eines Auflaufelements des ersten Verschlussteils;
- Fig. 8B, 8C: perspektivische Ansichten des Auflaufelements;
- Fig. 9A, 9B: Seitenansichten des Auflaufelements;
- Fig. 10: eine Draufsicht auf das Auflaufelement;
- Fig. 11: eine Ansicht des ersten Verschlussteils von unten, mit daran angeordneten Auflaufelementen;
- Fig. 12A-12D: Seitenansichten eines Verstellelements an einem zugeordneten Auflaufelement, betrachtet aus vier unterschiedlichen, jeweils um 90° zueinander versetzten Raumrichtungen;
- Fig. 13A-13D: die Ansichten gemäß Fig. 12A bis 12D, bei einer Drehbewegung des Verstellelements relativ zu dem Auflaufelement;
- Fig. 14A-14D: die Ansichten gemäß Fig. 13A bis 13D, bei weiterem Verdrehen des Verstellelements relativ zu dem zugeordneten Auflaufelement;
- Fig. 15: eine perspektivische Explosionsansicht eines weiteren Ausführungsbeispiels einer Verschlussvorrichtung mit einem ersten Verschlussteil und einem zweiten Verschlussteil, die entlang einer Schließrichtung aneinander ansetzbar sind;
- Fig. 16: eine andere perspektivische Explosionsansicht;
- Fig. 17A: eine perspektivische Ansicht der Verschlussvorrichtung vor dem Schließen;
- Fig. 17B: eine perspektivische Ansicht der Verschlussvorrichtung vor dem Schließen, von unten;
- Fig. 17C: eine frontale Ansicht der Anordnung gemäß Fig. 17A;
- Fig. 17D: eine Draufsicht auf die Anordnung gemäß Fig. 17A;
- Fig. 17E: eine Schnittansicht entlang der Linie A-A gemäß Fig. 17D;
- Fig. 17F: eine Schnittansicht entlang der Linie B-B gemäß Fig. 17D;
- Fig. 17G: eine Seitenansicht der Verschlussvorrichtung;
- Fig. 17H: eine Schnittansicht entlang der Linie C-C gemäß Fig. 17G;
- Fig. 17I: eine Schnittansicht entlang der Linie D-D gemäß Fig. 17H;
- Fig. 18A: eine perspektivische Ansicht der Verschlussvorrichtung beim Schließen;
- Fig. 18B: eine perspektivische Ansicht der Verschlussvorrichtung vor dem Schließen, von unten;
- Fig. 18C: eine frontale Ansicht der Anordnung gemäß Fig. 18A;
- Fig. 18D: eine Draufsicht auf die Anordnung gemäß Fig. 18A;
- Fig. 18E: eine Schnittansicht entlang der Linie A-A gemäß Fig. 18D;
- Fig. 18F: eine Schnittansicht entlang der Linie B-B gemäß Fig. 18D;
- Fig. 18G: eine Seitenansicht der Verschlussvorrichtung;
- Fig. 18H: eine Schnittansicht entlang der Linie C-C gemäß Fig. 18G;
- Fig. 18I: eine Schnittansicht entlang der Linie D-D gemäß Fig. 18H;
- Fig. 19A: eine perspektivische Ansicht der Verschlussvorrichtung beim weiteren Schließen bei Verdrehen eines Antriebselements zum Verstellen von Verstellelementen des ersten Verschlussteils;
- Fig. 19B: eine perspektivische Ansicht der Verschlussvorrichtung vor dem Schließen, von unten;
- Fig. 19C: eine frontale Ansicht der Anordnung gemäß Fig. 19A;
- Fig. 19D: eine Draufsicht auf die Anordnung gemäß Fig. 19A;
- Fig. 19E: eine Schnittansicht entlang der Linie A-A gemäß Fig. 19D;
- Fig. 19F: eine Schnittansicht entlang der Linie B-B gemäß Fig. 19D;
- Fig. 19G: eine Seitenansicht der Verschlussvorrichtung;
- Fig. 19H: eine Schnittansicht entlang der Linie C-C gemäß Fig. 19G;
- Fig. 19I: eine Schnittansicht entlang der Linie D-D gemäß Fig. 19H;
- Fig. 20A: eine perspektivische Ansicht der Verschlussvorrichtung in einer Schließstellung nach Verdrehen der Verstellelemente des ersten Verschlussteils;
- Fig. 20B: eine perspektivische Ansicht der Verschlussvorrichtung vor dem Schließen, von unten;
- Fig. 20C: eine frontale Ansicht der Anordnung gemäß Fig. 20A;
- Fig. 20D: eine Draufsicht auf die Anordnung gemäß Fig. 20A;
- Fig. 20E: eine Schnittansicht entlang der Linie A-A gemäß Fig. 20D;
- Fig. 20F: eine Schnittansicht entlang der Linie B-B gemäß Fig. 20D;
- Fig. 20G: eine Seitenansicht der Verschlussvorrichtung;
- Fig. 20H: eine Schnittansicht entlang der Linie C-C gemäß Fig. 20G;
- Fig. 20I: eine Schnittansicht entlang der Linie D-D gemäß Fig. 20H;
- Fig. 21: eine Skizze zum Veranschaulichen einer zu einer Stecköffnung exzentrischen Lageröffnung;
- Fig. 22A: eine Skizze darstellend ein exzentrisch gelagertes Verstellelement in einer ersten Stellung;
- Fig. 22B: eine Skizze darstellend das exzentrisch gelagerte Verstellelement in einer zweiten Stellung;
- Fig. 23A, 23B: perspektivische Ansichten eines Ausführungsbeispiels mit an einem ersten Verschlussteil und einem zweiten Verschlussteil angeordneten elektrischen Kontaktanordnungen;
- Fig. 23C: eine Draufsicht auf das Gehäuseteil des ersten Verschlussteils mit einer daran angeordneten elektrischen Kontaktanordnung;
- Fig. 23D: eine Schnittansicht Linie A-A gemäß Fig. 23C;
- Fig. 24: eine Ansicht eines anderen Ausführungsbeispiels einer Kontaktanordnung des ersten Verschlussteils;
- Fig. 25: an Ansicht eines wiederum anderen Ausführungsbeispiels einer Kontaktanordnung des ersten Verschlussteils;
- Fig. 26A: eine Ansicht eines wiederum anderen Ausführungsbeispiels von Verschlussteilen mit einer jeweils daran angeordneten elektrischen Kontaktanordnung;
- Fig. 26B: eine Seitenansicht der Anordnung gemäß Fig. 26A;
- Fig. 26C: eine Längsschnittansicht durch die Verschlussvorrichtung;
- Fig. 27A: eine Ansicht eines Ausführungsbeispiels einer Verschlussvorrichtung mit einem ersten Verschlussteil, das zur gleichen Seite geöffnete Stecköffnungen aufweist, in einer nicht betätigten Stellung eines Betätigungselements;
- Fig. 27B: die Anordnung gemäß Fig. 27A, in einer betätigten Stellung des Betätigungselements; und
- Fig. 28: eine Ansicht eines zugeordneten zweiten Verschlussteils.

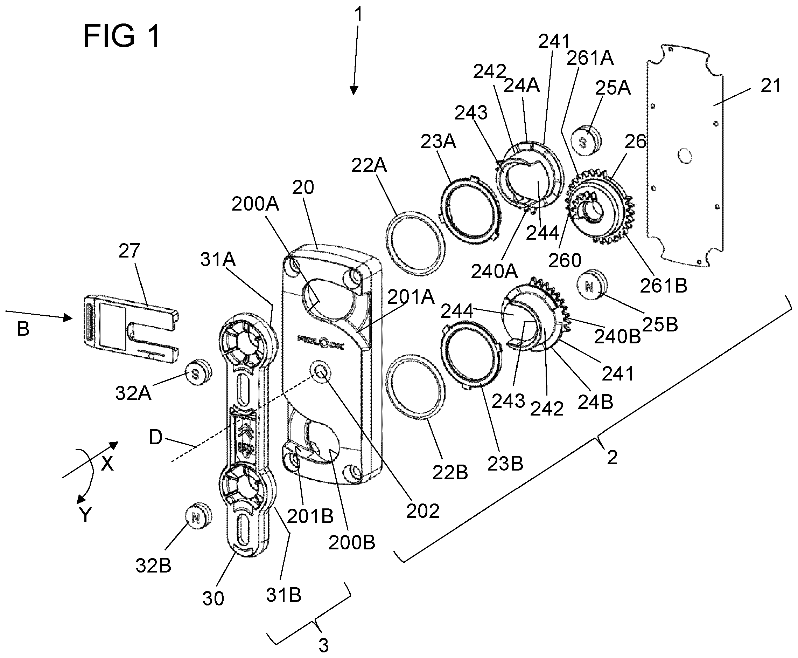

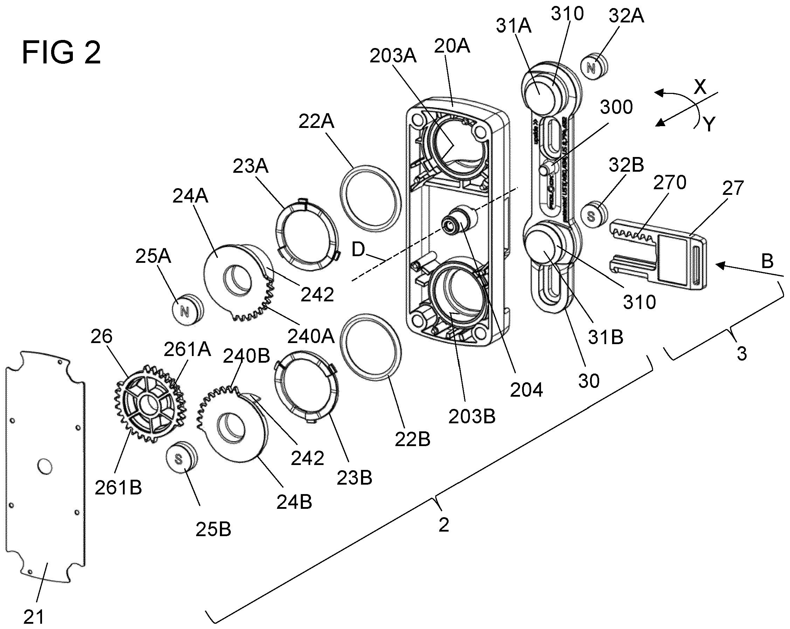

Fig. 1 und 2 zeigen ein erstes Ausführungsbeispiel einer Verschlussvorrichtung 1, die zwei Verschlussteile 2, 3 aufweist, die entlang einer Schließrichtung X aneinander angesetzt werden können und in einer Schließstellung der Verschlussvorrichtung 1 so miteinander verbunden sind, dass die Verschlussteile 2, 3 entlang der Schließrichtung X zueinander festgelegt sind und insbesondere nicht entgegen der Schließrichtung X ohne weiteres, zumindest nicht ohne Lösen der Verbindung voneinander abgenommen werden können.

Ein erstes Verschlussteil 2 weist ein Gehäuseteil 20 auf, das Stecköffnungen 200A, 200B zum Einstecken von an einem Gehäuse 30 geformten Eingriffselementen 31A, 31B eines zweiten Verschlussteils 3 ausbildet. Die Eingriffselemente 31A, 31B können entlang der Steckrichtung X in die Stecköffnungen 200A, 200B eingesteckt werden, um auf diese Weise die Verschlussteile 2, 3 miteinander zu verbinden.

Innerhalb des Gehäuseteils 20 sind Verstellelemente 24A, 24B jeweils in einer Lageröffnung 203A, 203B drehbar gelagert. Die Verstellelemente 24A, 24B des ersten Verschlussteils 2 sind jeweils durch eine Basis 244 gebildet, von der ein starrer Bundabschnitt 242 entlang der Schließrichtung X vorsteht. An dem Bundabschnitt 242 ist jeweils ein Eingriffsvorsprung 243 geformt, der von dem (starren) Bundabschnitt 242 radial nach innen vorsteht.

Der Bundabschnitt 242 eines jeden Verstellelements 24A, 24B bildet eine Aufnahme zum Aufnehmen eines zugeordneten Eingriffselements 31A, 31B des zweiten Verschlussteils 3 aus und weist eine C-Form auf, die sich halbkreisförmig an der Basis 244 erstreckt. Die Basis 244 bildet hierbei eine Anlagefläche aus, mit der das jeweils zugeordnete Eingriffselement 31A, 31B des zweiten Verschlussteils 3 in einer Schließstellung der Verschlussvorrichtung 1 in Anlage gelangen kann.

Die Verstellelemente 24A, 24B sind jeweils drehbar in der zugeordneten Lageröffnung 203A, 203B des Gehäuseteils 20 gelagert und somit zu dem Gehäuseteil 20 verdrehbar. Wie nachfolgend noch erläutert werden soll, sind die Verstellelemente 24A, 24B zwischen einer ersten Stellung und einer zweiten Stellung an dem Gehäuseteil 20 verstellbar. In der ersten Stellung der Verstellelemente 24A, 24B kann das zweite Verschlussteil 3 mit den Eingriffselementen 31A, 31B in die Stecköffnungen 200A, 200B eingesteckt werden, sodass die Verschlussteile 2, 3 miteinander verbunden werden können. In der zweiten Stellung sperren die Verstellelemente 24A, 24B ein Öffnen der Verschlussvorrichtung 2, 3.

Bei dem dargestellten Ausführungsbeispiel ist an dem Gehäuse 30 des zweiten Verschlussteils 3 ein Lagerzapfen 300 geformt, der bei Ansetzen der Verschlussteile 2, 3 aneinander mit einer Eingriffsöffnung 202 am Gehäuseteil 20 des ersten Verschlussteils 2 in Eingriff gelangt. Über den Eingriff des Lagerzapfens 300 in die Eingriffsöffnung 202 sind die Verschlussteile 2, 3 um eine Drehachse D schwenkbar zueinander gelagert, wenn die Verschlussteile 2, 3 aneinander angesetzt sind.

Die Eingriffselemente 31A, 31B können jeweils in die Schließrichtung X in die zugeordneten Stecköffnungen 200A, 200B eingesetzt werden. Die Stecköffnungen 200A, 200B sind hierbei jeweils über eine Ausgangsöffnung 201A, 201B seitlich in einer zur Schließrichtung X senkrechten Ebene geöffnet, sodass durch Verschwenken der Verschlussteile 2, 3 in eine Öffnungsrichtung Y relativ zueinander die Eingriffselemente 31A, 31B durch die Ausgangsöffnungen 201A, 201B aus den Stecköffnungen 200A, 200B heraus bewegt werden können, um auf diese Weise die Verschlussteile 2, 3 zum Öffnen der Verschlussvorrichtung 1 voneinander zu lösen.

Wie dies beispielsweise aus Fig. 2 ersichtlich ist, sind die Eingriffselemente 31A, 31B als Zapfen an dem Gehäuse 30 des zweiten Verschlussteils 3 geformt. An einem Schaftabschnitt 311 ist hierbei ein umfänglich umlaufender Eingriffsvorsprung 310 geformt, der in geschlossener Stellung der Verschlussvorrichtung 1 mit dem Eingriffsvorsprung 243 des zugeordneten Verstellelements 24A, 24B des ersten Verschlussteils 2 in Eingriff steht, sodass die Verschlussteile 2, 3 über den Eingriff formschlüssig entlang der Schließrichtung X aneinander gehalten sind.

An einem Lagerelement 204 des Gehäuseteils 20 des ersten Verschlussteils 2 (das in seinem Inneren die Eingriffsöffnung 202 ausbildet) ist ein Antriebselement 26 drehbar gelagert, das Verzahnungsabschnitte 261A, 261B aufweist, die mit Verzahnungsabschnitten 240A, 240B der Verstellelemente 24A, 24B in Verzahnungseingriff stehen. Durch Verdrehen des Antriebselements 26 können somit die Verstellelemente 24A, 24B gemeinsam und vorzugsweise synchron an dem Gehäuseteil 20 verstellt werden.

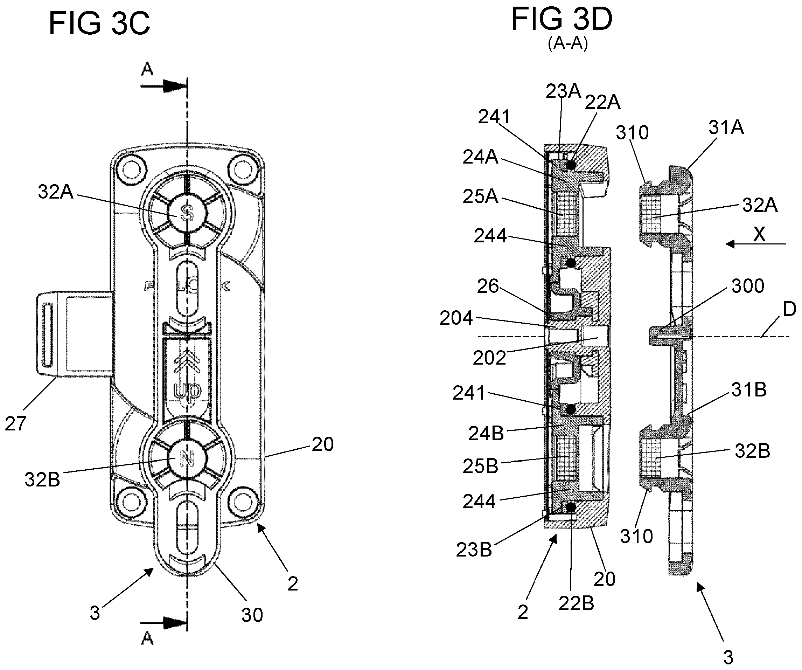

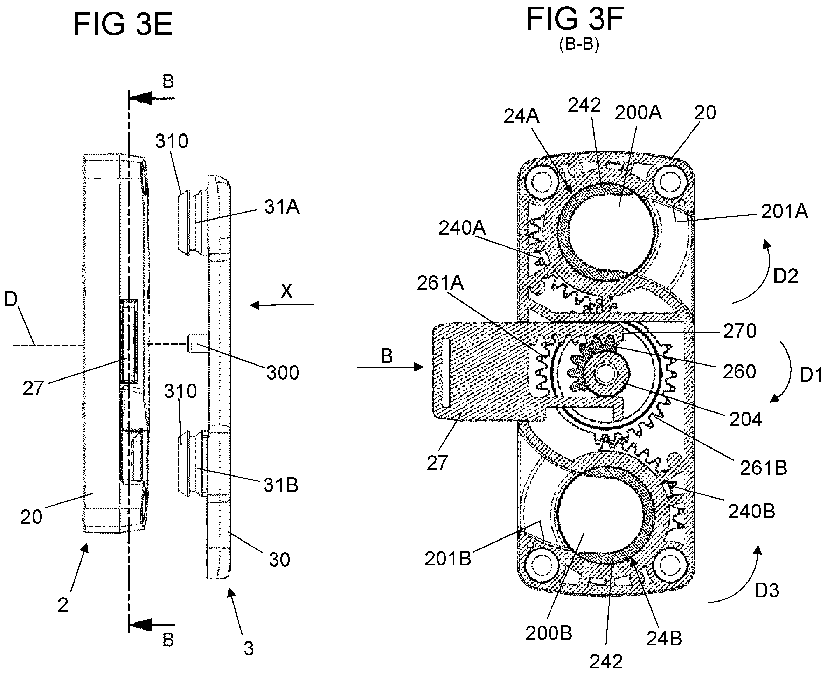

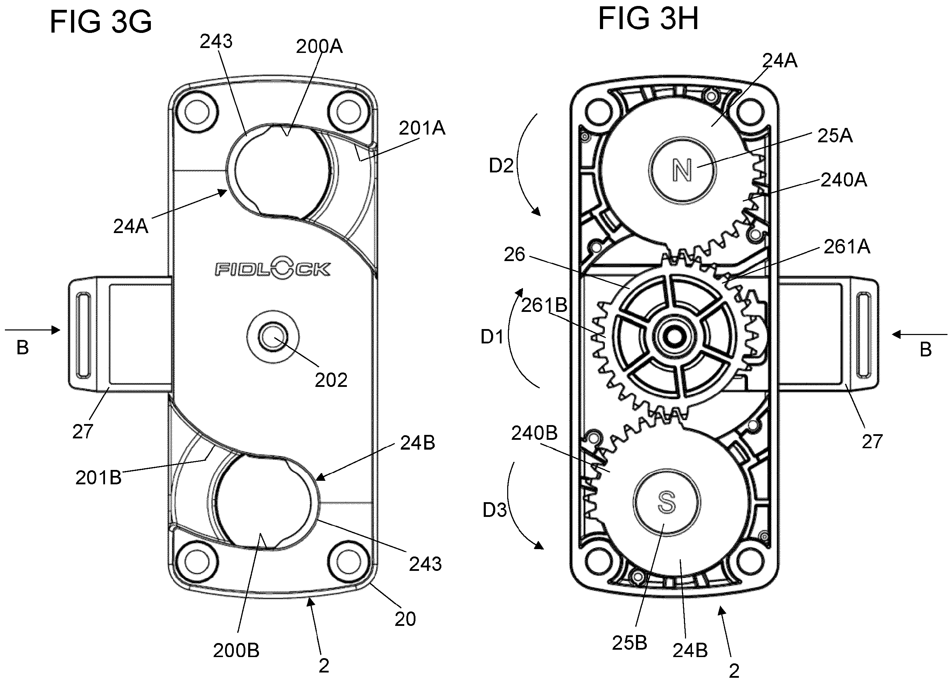

Bei Verdrehen des Antriebselements 26 in eine Drehrichtung D1 werden die Verstellelemente 24A, 24B dabei an dem Gehäuseteil 20 in die Drehrichtung D2, D3 verdreht, wie dies aus Fig. 3F ersichtlich ist.

An dem Gehäuseteil 20 ist ein Betätigungselement 27 in Form eines Drückers entlang einer Betätigungsrichtung B linear verschiebbar angeordnet. Das Betätigungselement 27 weist einen Verzahnungsabschnitt 270 auf, der mit einem zugeordneten Verzahnungsabschnitt 260 des Antriebselements 26 in Verzahnungseingriff steht. Über den nach Art einer Zahnstange ausgebildeten Verzahnungsabschnitt 270 wird eine lineare Bewegung des Betätigungselements 27 umgesetzt in eine Drehbewegung des Antriebselements 26, sodass darüber die Verstellelemente 24A, 24B an dem Gehäuseteil 20 verstellt werden können.

Das Betätigungselement 27 kann durch einen Nutzer händisch betätigt werden. Insbesondere können die Verstellelemente 24A, 24B durch Eindrücken des Betätigungselements 27 in die Betätigungsrichtung B in das Gehäuseteil 20 hinein aus ihrer ersten Stellung, in der ein Ansetzen der Verschlussteile 2, 3 aneinander möglich ist, in eine zweite Stellung überführt werden, in der die Verbindung der Verschlussteile 2, 3 miteinander gesperrt ist und die Verschlussteile 2, 3 insbesondere nicht um die Drehachse D zum Öffnen der Verschlussvorrichtung 1 zueinander verschwenkt werden können.

An dem Gehäuseteil 20 sind Auflaufelemente 23A, 23B drehfest angeordnet und axial entlang der Schließrichtung X über Elastizitätselemente 22A, 22B in Form von elastisch verformbaren Ringelementen an dem Gehäuseteil 20 abgestützt. Die Auflaufelemente 23A, 23B sind jeweils in Anlage mit einem Auflaufabschnitt 241 an dem jeweils zugeordneten Verstellelement 24A, 24B, sodass bei einem Verdrehen des jeweiligen Verstellelements 24A, 24B der Auflaufabschnitt 241 des Verstellelements 24A, 24B an dem Auflaufelement 23A, 23B gleitet.

An einem jeden Auflaufelement 23A, 23B und dem jeweils zugeordneten Auflaufabschnitt 241 sind Rampenabschnitte 232, 245 geformt, die bei einem Verdrehen des Verstellelements 24A, 24B aneinander gleiten und somit eine axiale Positionsänderung des jeweiligen Verstellelements 24A, 24B entlang der Schließrichtung X relativ zu dem Gehäuseteil 20 bewirken. In Zusammenwirken mit dem jeweiligen Elastizitätselement 22A, 22B werden auf diese Weise die Verstellelemente 24A, 24B verstellt und bewirken eine elastische Vorspannung an den Eingriffselementen 31A, 31B, sodass die Verschlussteile 2, 3 elastisch zueinander vorgespannt und somit spielfrei und klapperfrei unter Ausgleich von Fertigungs- und Montagetoleranzen zueinander festgelegt werden.

Das erste Verschlussteil 2 weist magnetische Elemente 25A, 25B auf, die an den Verstellelementen 24A, 24B angeordnet sind. An dem zweiten Verschlussteil 3 sind magnetische Elemente 32A, 32B an den Eingriffselementen 31A, 31B angeordnet. Die magnetischen Elemente 25A, 25B, 32A, 32B wirken magnetisch anziehend zusammen und unterstützen auf diese Weise das Ansetzen der Verschlussteile 2, 3 entlang der Schließrichtung X aneinander.

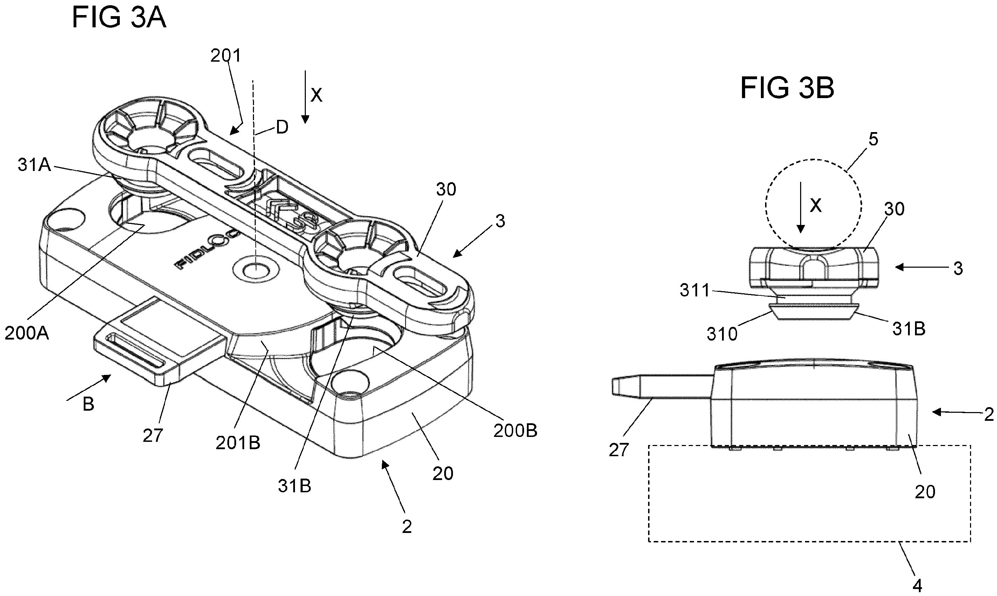

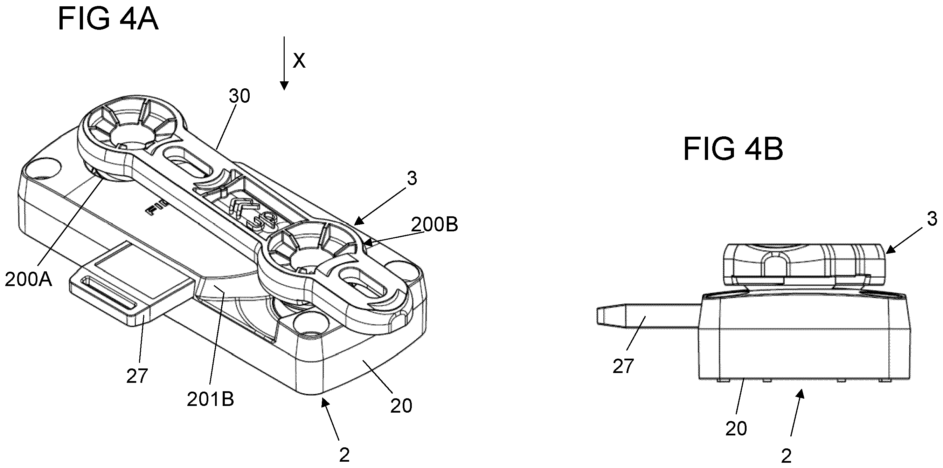

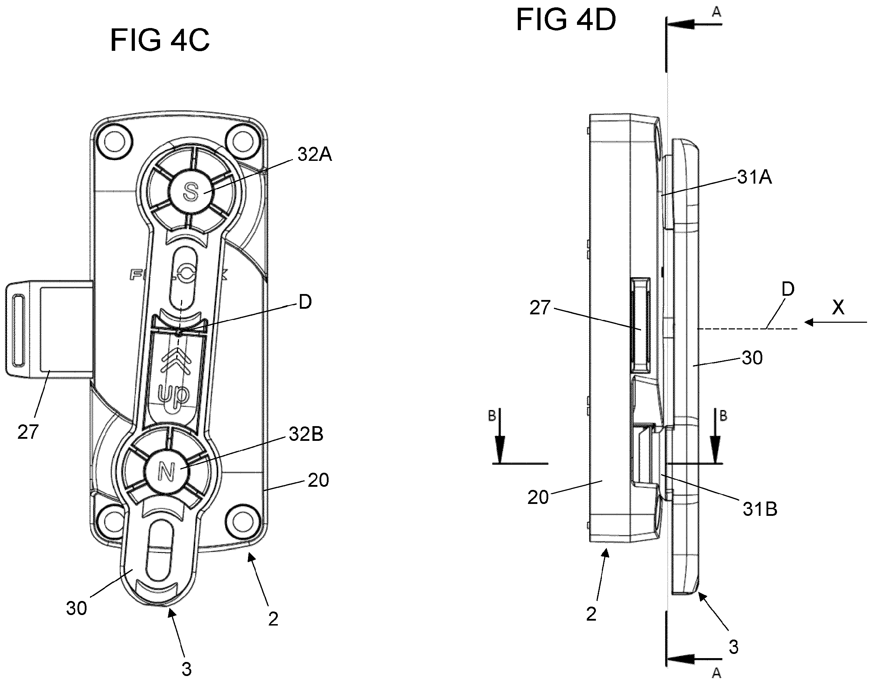

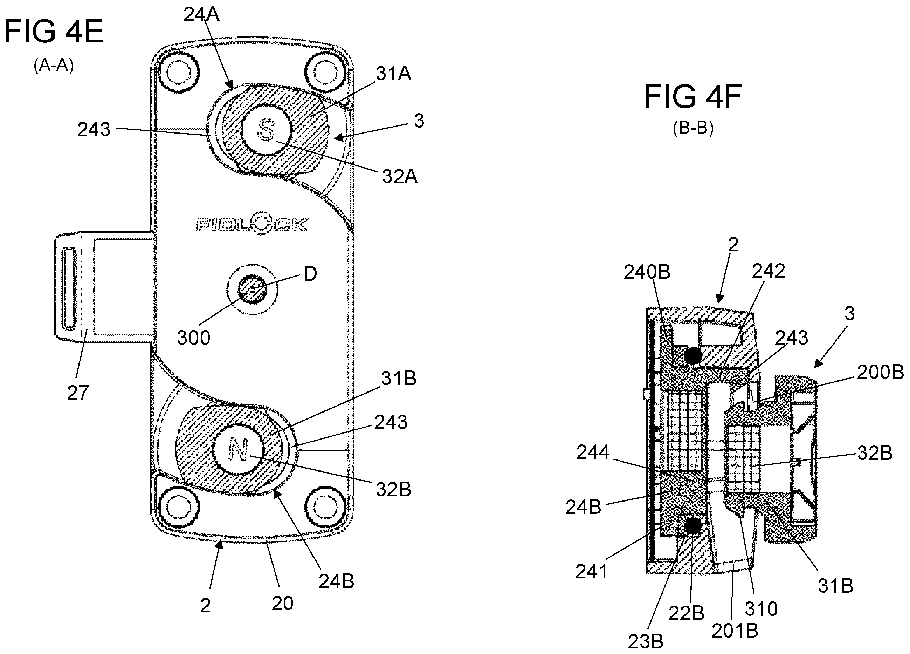

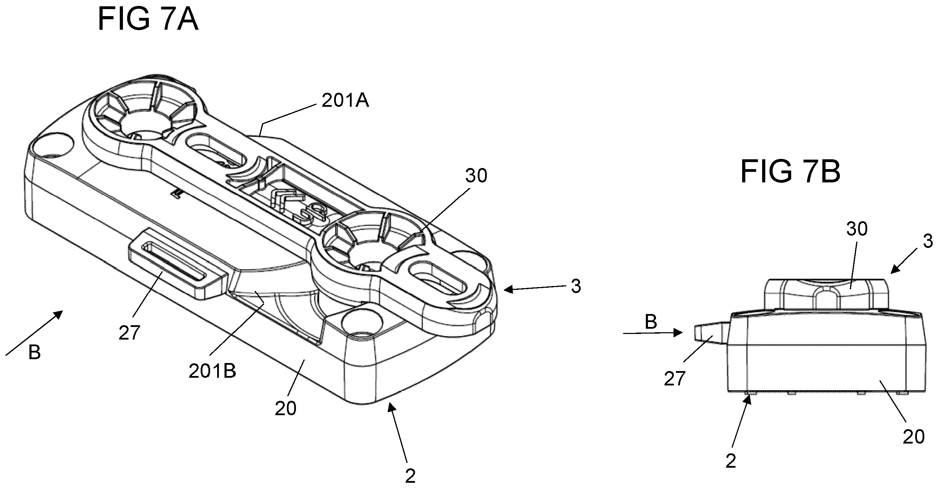

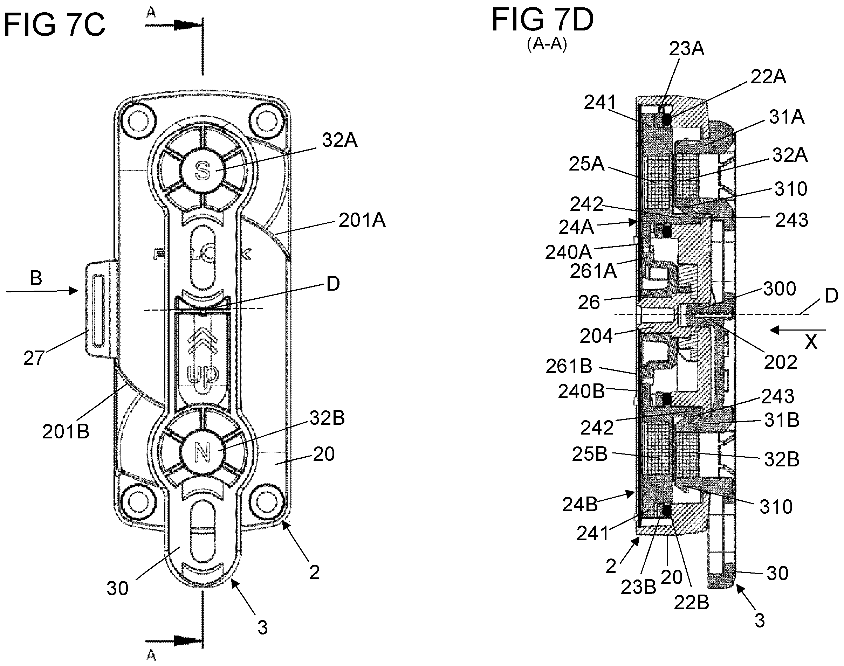

Fig. 3A-3H, Fig. 4A-4F, Fig. 5A-5E, Fig. 6A-6H und Fig. 7A-7E zeigen die Verschlussvorrichtung 1 in unterschiedlichen Stellungen vor dem Schließen (Fig. 3A-3H), beim Schließen (Fig. 4A-4F, Fig. 5A-5E und Fig. 6A-6H) und in der Schließstellung (Fig. 7A-7E).

Zum Schließen der Verschlussvorrichtung 1 werden die Verschlussteile 2, 3 entlang der Schließrichtung X aneinander angesetzt. Wie dies schematisch in Fig. 3B dargestellt ist, sind die Verschlussteile 2, 3 hierbei unterschiedlichen Baugruppen 4, 5 zugeordnet, sodass durch Verbinden der Verschlussteile 2, 3 die Baugruppen 4, 5 miteinander verbunden werden können.

Entscheidend zum Verbinden ist hierbei eine Relativbewegung zwischen den Verschlussteilen 2, 3. Wesentlich ist hingegen nicht, ob eins der Verschlussteile 2, 3 beim Schließvorgang stationär verbleibt und lediglich das andere Verschlussteil 3, 2 bewegt wird oder ob beide Verschlussteile 2, 3 aufeinander zu bewegt werden.

Beispielsweise kann das Verschlussteil 3 stationär an einer zugeordneten Baugruppe 5, zum Beispiel einem Fahrradrahmen, festgelegt sein, sodass durch Ansetzen des anderen Verschlussteils 2 die zugeordnete Baugruppe 4 an der Baugruppe 5 festgelegt werden kann.

Zum Schließen der Verschlussvorrichtung 1 werden die Eingriffselemente 31A, 31B in die zugeordneten Stecköffnungen 200A, 200B des Gehäuseteils 20 des Verschlussteils 2 entlang der Schließrichtung X eingeführt, wie dies aus Fig. 3A-3H ersichtlich ist. Die Verstellelemente 24A, 24B befinden sich hierbei in der insbesondere aus Fig. 3A ersichtlichen Stellung, in der der Bundabschnitt 242 eine solche Stellung in der jeweils zugeordneten Stecköffnung 200A, 200B einnimmt, dass die Ausgangsöffnung 201A, 201B nicht durch den Bundabschnitt 242 versperrt ist.

Wie dies aus der Schnittansicht gemäß Fig. 3D ersichtlich ist, stehen sich die magnetischen Elemente 25A, 25B, 32A, 32B der Verschlussteile 2, 3 beim Ansetzen der Verschlussteile 2, 3 aneinander magnetisch anziehend gegenüber, sodass die Verschlussteile 2, 3 entlang der Schließrichtung X zueinander hin gezogen werden.

Wie dies aus Fig. 3A ersichtlich ist, nimmt das Betätigungselement 27 in der dargestellten Stellung der Verstellelemente 24A, 24B eine nach außen vorragende Stellung an dem Gehäuseteil 20 ein. An dem Betätigungselement 27 kann hierbei beispielsweise eine Markierung, zum Beispiel eine rote Farbmarkierung, angebracht sein, die einem Nutzer signalisiert, dass die Verstellelemente 24A, 24B sich in ihrer ersten Stellung befinden.

Beim Ansetzen gelangen die Eingriffsvorsprünge 310 an den Eingriffselementen 31A, 31B in Eingriff mit den Eingriffsvorsprüngen 243 an den starren Bundabschnitten 242 der Verstellelemente 24A, 24B. Beim Ansetzen der Verschlussteile 2, 3 gelangt zudem der Lagerzapfen 300 in Eingriff mit der zugeordneten Eingriffsöffnung 202, sodass eine drehende Lagerung zwischen den Verschlussteilen 2, 3 hergestellt wird, wie dies aus Fig. 4A-4F ersichtlich ist.

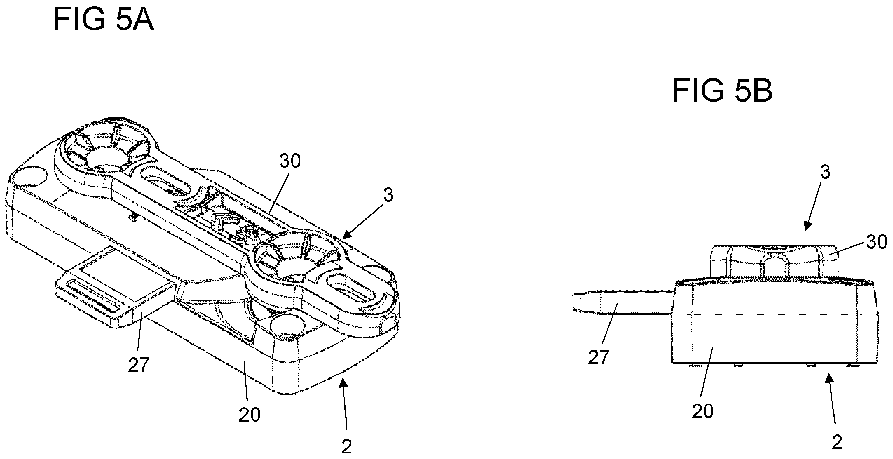

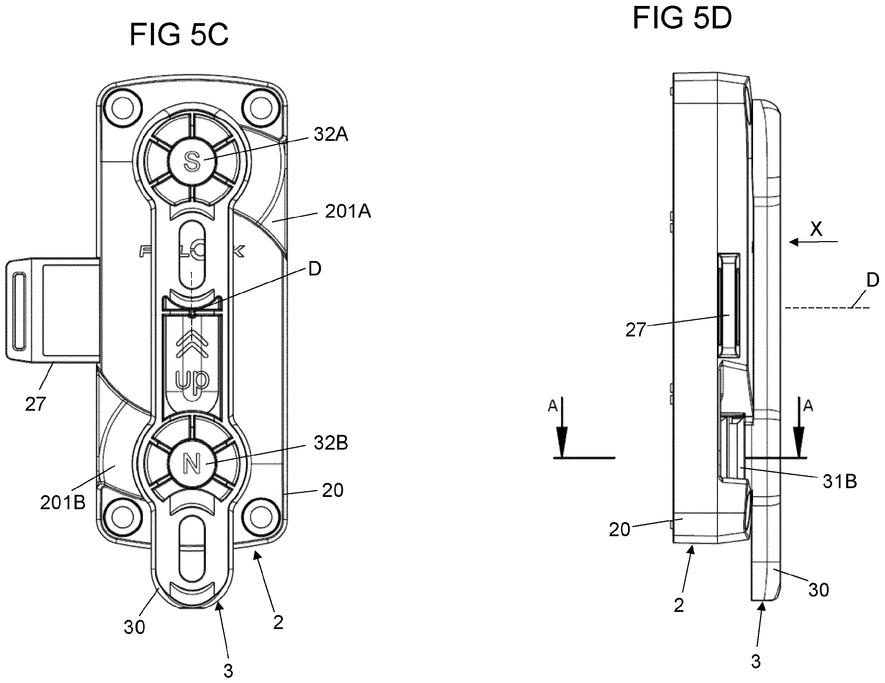

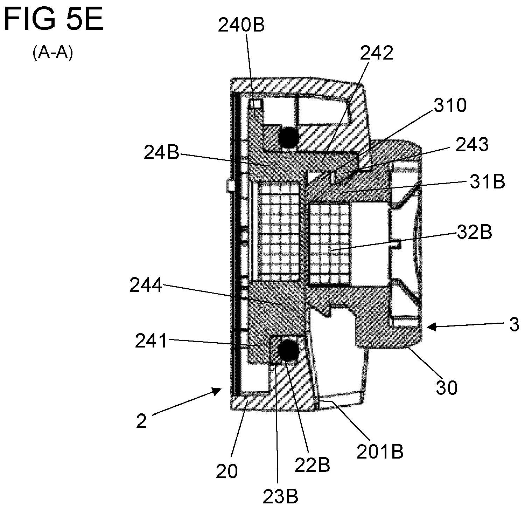

Wie aus Fig. 4A, 4C und 4F ersichtlich, werden die Verschlussteile 2, 3 beim Ansetzen soweit um die Drehachse D zueinander ausgelenkt, dass die Eingriffsvorsprünge 310 an den Eingriffselementen 31A, 31B an den Eingriffsvorsprüngen 243 an den Verstellelementen 24A, 24B vorbeibewegt werden können. Nachdem die Eingriffsvorsprünge 310 an den Eingriffselementen 31A, 31B die Eingriffsvorsprünge 243 an den Verstellelementen 24A, 24B passiert haben, gelangen die Eingriffsvorsprünge 243, 310 quer zur Schließrichtung X miteinander in Eingriff, wie dies aus Fig. 5A-5E ersichtlich ist.

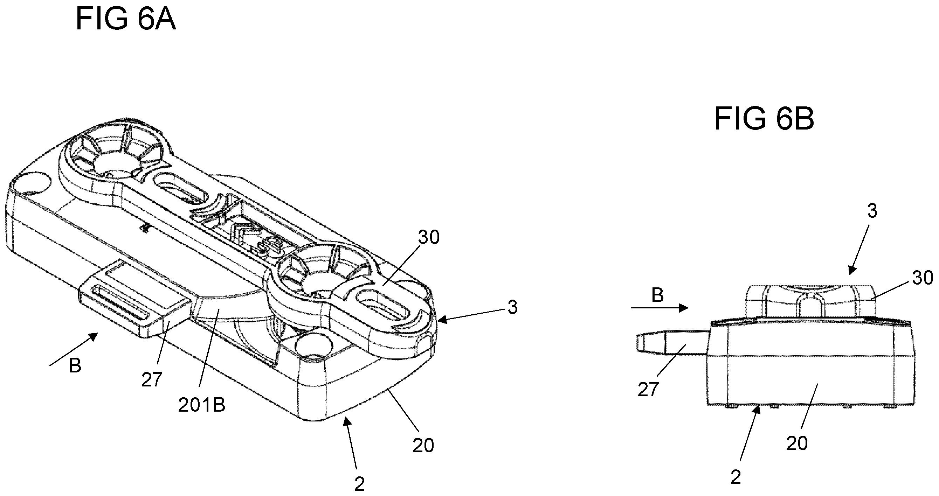

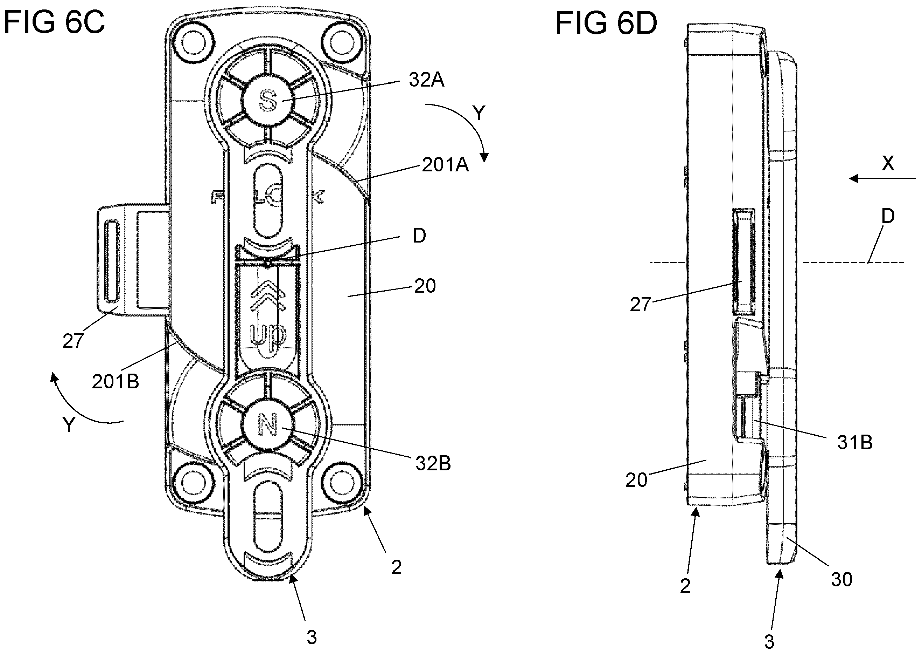

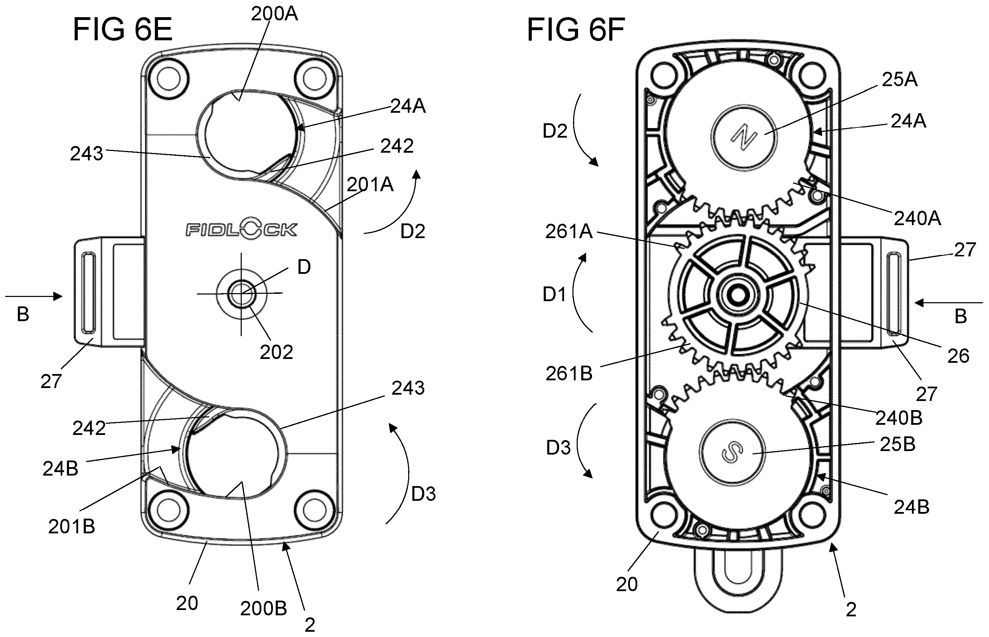

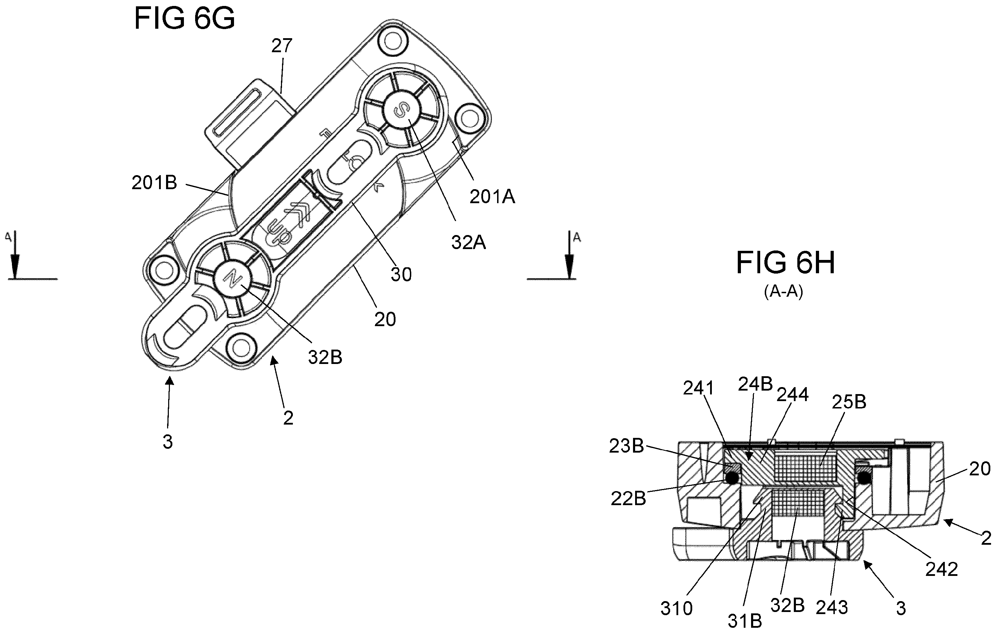

Nach dem Ansetzen der Verschlussteile 2, 3 sind die Verstellelemente 24A, 24B zunächst noch, wie aus Fig. 5A-5E ersichtlich, in ihrer ersten Stellung, in der die Ausgangsöffnungen 201A, 201B an den Stecköffnungen 200A, 200B freigegeben sind und somit ein Öffnen der Verschlussvorrichtung 1 durch Verschwenken der Verschlussteile 2, 3 um die Drehachse D relativ zueinander möglich ist. Nach dem Ansetzen der Verschlussteile 2, 3 aneinander kann ein Nutzer durch ein Drücken des Betätigungselements 27 in die Betätigungsrichtung B in das Gehäuseteil 20 die Verstellelemente 24A, 24B aus ihrer ersten Stellung in die zweite Stellung verdrehen, wie dies im Übergang von Fig. 6A-6H hin zu Fig. 7A-7E ersichtlich ist.

Beim Eindrücken des Betätigungselements 27 werden die Verstellelemente 24A, 24B jeweils an den zugeordneten Lageröffnungen 203A, 203B in die Drehrichtungen D2, D3 (siehe Fig. 3F) verdreht, sodass sich die Eingriffsvorsprünge 243 an den Stecköffnungen 200A, 200B verdrehen (siehe Fig. 6B und 6F). In der zweiten Stellung der Verstellelemente 24A, 24B nehmen die Bundabschnitte 242 der Verstellelemente 24A, 24B hierbei jeweils eine solche Stellung an der zugeordneten Stecköffnung 200A, 200B ein, dass der Bundabschnitt 242 die jeweils zugeordnete Ausgangsöffnung 201A, 201B versperrt und somit die Eingriffselemente 31A, 31B nicht in die Öffnungsrichtung Y aus den Stecköffnungen 200A, 200B heraus bewegt werden können.

In der zweiten Stellung der Verstellelemente 24A, 24B ist ein Verschwenken der Verschlussteile 2, 3 um die durch den Lagerzapfen 300 geschaffene drehende Lagerung somit gesperrt. Die Verschlussvorrichtung 1 kann nicht geöffnet werden, jedenfalls nicht unbeabsichtigt ohne Betätigung der Verstellelemente 24A, 24B.

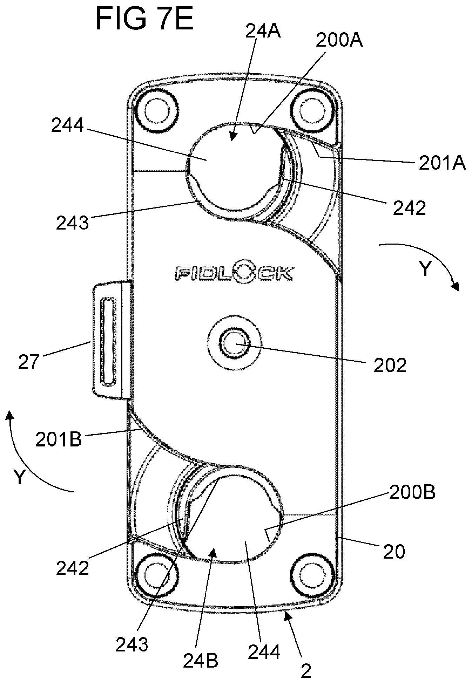

Wie dies aus Fig. 7E ersichtlich ist, ist in der zweiten Stellung der Verstellelemente 24A, 24B das Betätigungselement 27 in das Gehäuseteil 20 hineingedrückt, sodass beispielsweise eine Markierung an dem Betätigungselement 27 nicht mehr sichtbar ist. Ein Nutzer wird somit darüber informiert, dass sich die Verstellelemente 24A, 24B in der zweiten Stellung befinden und die Verbindung zwischen den Verschlussteilen 2, 3 somit gesichert ist.

Soll die Verschlussvorrichtung 1 wieder geöffnet werden, kann das Betätigungselement 27 entgegen der Betätigungsrichtung B aus dem Gehäuseteil 20 herausgezogen werden, sodass dadurch die Verstellelemente 24A, 24B aus der zweiten Stellung (Fig. 7E) zurück in ihre erste Stellung (Fig. 3G) verdreht werden. Die Verschlussteile 2, 3 können somit um die Drehachse D zueinander verschwenkt werden, und die Verschlussvorrichtung 1 kann geöffnet werden.

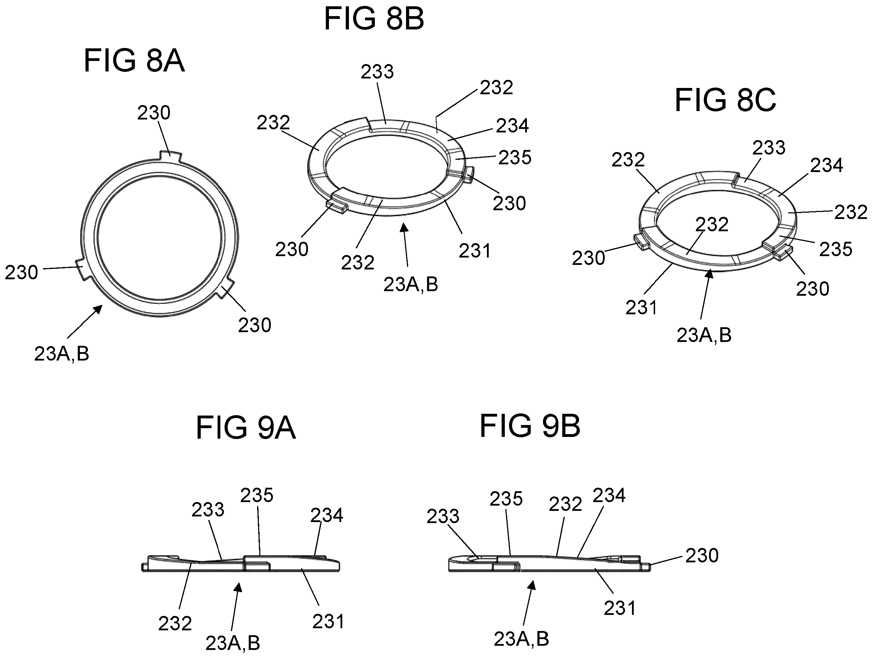

Fig. 8A-8C, 9A, 9B und 10 zeigen Ansichten des Auflaufelements 23A, 23B. Ein solches Auflaufelement 23A, 23B ist hierbei jedem Verstellelement 24A, 24B zugeordnet.

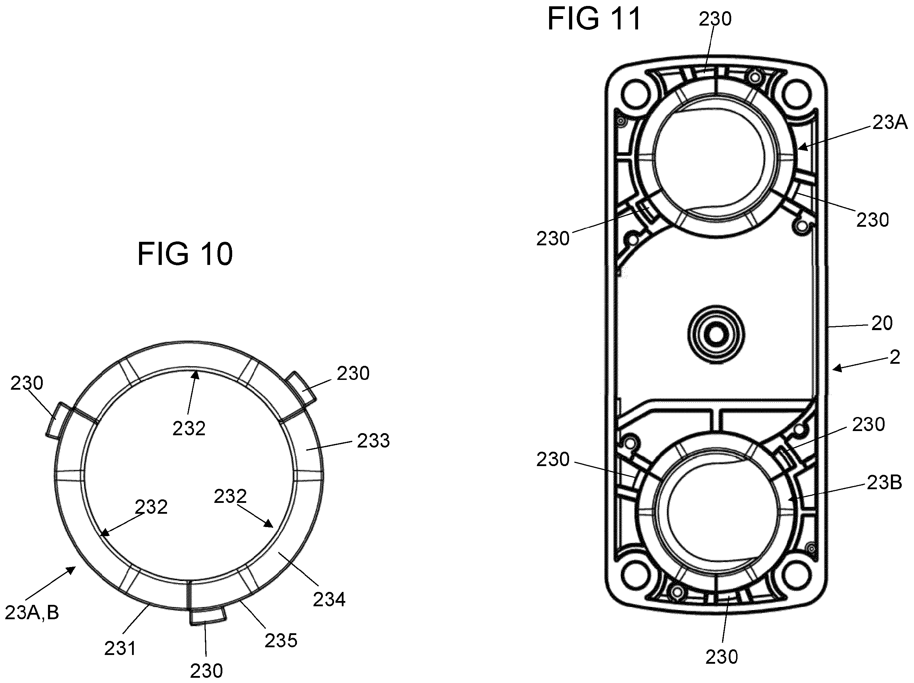

Das Auflaufelement 23A, 23B ist über Formschlusselemente 230 in Form von radial vorstehenden Zapfen drehfest an dem Gehäuseteil 20 aufgenommen, wie dies aus Fig. 11 ersichtlich ist. Das Auflaufelement 23A, 23B ist hierbei über ein Elastizitätselement 22A, 22B axial an dem Gehäuseteil 20 abgestützt und kann somit im Rahmen der Elastizität des Elastizitätselements 22A, 22B zumindest geringfügig axial an dem Gehäuseteil 20 bewegt werden.

Das Auflaufelement 23A, 23B weist einen Ringkörper 231 auf, an dessen einer Seite ein Auflaufabschnitt 232 geformt ist. Der Auflaufabschnitt 232 ist durch drei Rampenabschnitte 234 geformt, an die jeweils beidseits ein Plateau 233, 235 anschließt. Die Plateaus 233, 235 befinden sich hierbei axial an unterschiedlichen Positionen.

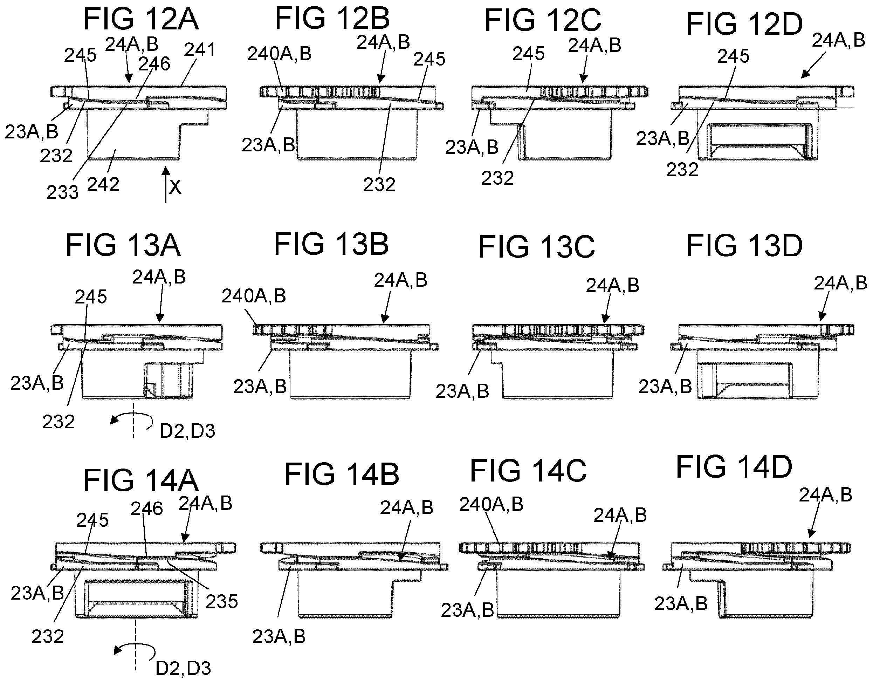

Fig. 12A-12D zeigen der Verstellelemente 24A, 24B gemeinsam mit dem zugeordneten Auflaufelement 23A, 23B in der ersten Stellung. Fig. 12A-12D (wie auch Fig. 13A-13D und 14A-14D) zeigen hierbei Seitenansichten aus vier unterschiedlichen, um 90° zueinander versetzten Raumrichtungen.

In der ersten Stellung der Verstellelemente 24A, 24B liegt ein erhabenes Plateaus 246 an dem Auflaufabschnitt 241 des Verstellelements 24A, 24B an dem Plateau 233 des Auflaufelements 23A, 23B an, wie dies aus Fig. 12A ersichtlich ist.

Wird das Verstellelement 24A, 24B an dem Gehäuseteil 20 aus der ersten Stellung heraus verdreht, so läuft ein Rampenabschnitt 245 des Auflaufabschnitts 241 auf die Rampe 234 an dem Auflaufelement 23A, 23B auf (Fig. 13A-13D), bis das Plateau 246 am Auflaufabschnitt 241 an dem Plateau 235 an dem Auflaufelement 23A, 23B anliegt, wie dies aus Fig. 14A-14D ersichtlich ist. Durch Verdrehen wird somit ein axialer Abstand zwischen den Verstellelementen 24A, 24B und den Auflaufelementen 23A, 23B vergrößert, sodass die Verstellelemente 24A, 24B axial in die Schließrichtung X an dem Gehäuseteil 20 verstellt werden und somit durch elastische Verformung der Elastizitätselemente 22A, 22B eine elastische Vorspannungskraft bereitgestellt wird.

Insbesondere ziehen die Verstellelemente 24A, 24B durch ihre axiale Verstellung beim Verdrehen die Eingriffselemente 31A, 31B in die Schließrichtung X in Eingriff mit den Stecköffnungen 200A, 200B, sodass die Eingriffselemente 31A, 31B in die Schließrichtung X axial vorgespannt werden und die Verschlussteile 2, 3 somit unter axialer Vorspannung im Wesentlichen spielfrei aneinandergehalten werden. Auf diese Weise wird ein besonders sicherer, fester, spiel- und klapperfreier Halt der Verschlussteile 2, 3 aneinander hergestellt, der im Betrieb einen sicheren, zuverlässigen, vibrationssicheren Halt der Verschlussteile 2, 3 aneinander ermöglicht.

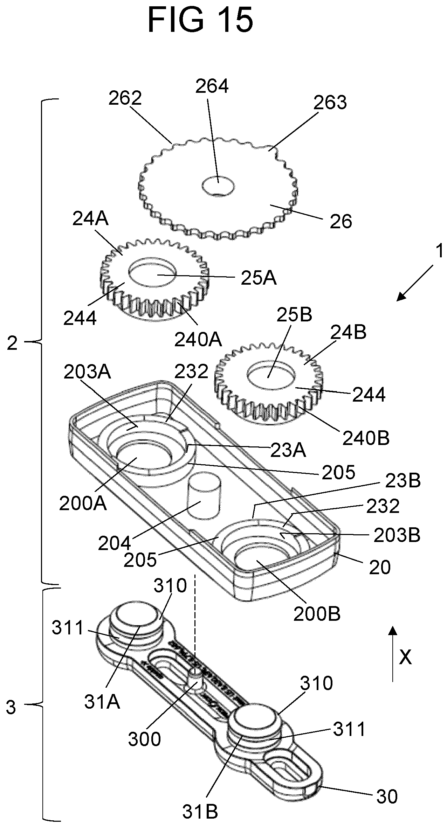

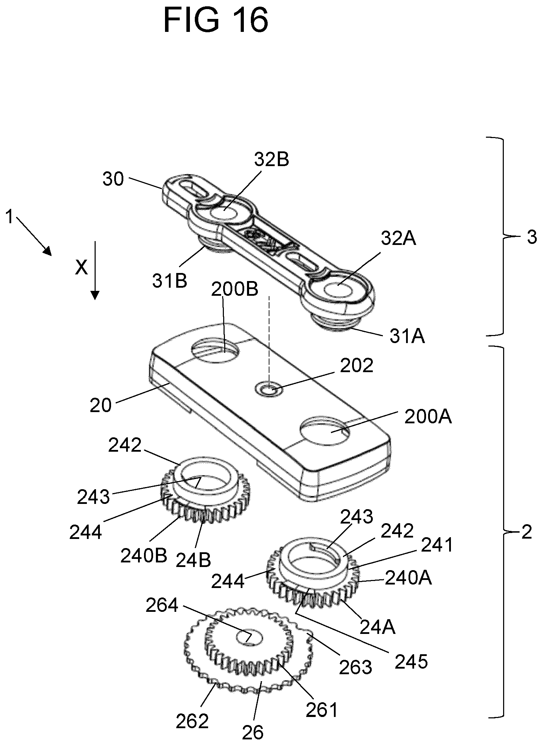

Bei einem weiteren, in Fig. 15 und 16 dargestellten Ausführungsbeispiel einer Verschlussvorrichtung 1 sind Verschlussteile 2, 3 entlang einer Schließrichtung X aneinander anzusetzen. Analog dem vorangehend beschriebenen Ausführungsbeispiel weist ein erstes Verschlussteil 2 hierbei ein Gehäuseteil 20 mit daran angeordneten Verstellelementen 24A, 24B auf. Ein zweites Verschlussteil 3 weist ein Gehäuse 30 mit daran geformten Eingriffselementen 31A, 31B auf.

Bei dem in Fig. 15 und 16 dargestellten Ausführungsbeispiel sind die Stecköffnungen 200A, 200B durch zumindest näherungsweise kreisrunde Öffnungen an einer Oberseite des Gehäuseteils 20 geformt. Die Eingriffselemente 31A, 31B können entlang der Schließrichtung X in die Stecköffnungen 200A, 200B eingesetzt werden, um die Verschlussvorrichtung 1 zu schließen, wobei in einer Schließstellung Eingriffsvorsprünge 310 an Schaftabschnitten 311 der Eingriffselemente 31A, 31B mit Eingriffsvorsprüngen 243 an Bundabschnitten 242 der Verstellelemente 24A, 24B in Eingriff sind und darüber die Verschlussteile 2, 3 entlang der Schließrichtung X zueinander festgelegt sind.

Zum Öffnen der Verschlussvorrichtung 1 kann, wie nachfolgend noch beschrieben werden soll, der Eingriff zwischen den Eingriffsvorsprüngen 243, 310 gelöst werden, sodass die Verschlussteile 2, 3 entgegen der Schließrichtung X unter Entfernen der Eingriffselemente 31A, 31B aus den Stecköffnungen 200A, 200B voneinander getrennt werden können.

Wie vorangehend beschrieben sind an den Verschlussteilen 2, 3 magnetische Elemente 25A, 25B, 32A, 32B angeordnet, die die Verschlussteile 2, 3 beim Schließen der Verschlussvorrichtung 1 entlang der Schließrichtung X zueinander hinziehen und das Schließen der Verschlussvorrichtung 1 somit magnetisch unterstützen.

Bei dem dargestellten Ausführungsbeispiel sind die Verstellelemente 24A, 24B jeweils in einer durch einen Lagerbund 205 im Inneren des Gehäuseteils 20 geformten Lageröffnung 203A, 203B aufgenommen und dadurch drehbar zu dem Gehäuseteil 20 gelagert. Die Verstellelemente 24A, 24B weisen jeweils einen Verzahnungsabschnitt 240A, 240B an einem Außenumfang einer Basis 244 auf, über den das jeweilige Verstellelement 24A, 24B mit einer Verzahnung 261 an einem Antriebselement 26 in Verzahnungseingriff steht. Das Antriebselement 26 ist über eine Lageröffnung 264 an einem Lagerelement 204 des Gehäuseteils 20 drehbar gelagert und steht mit einem geriffelten, umfänglichen Betätigungsabschnitt 262 nach außen von dem Gehäuseteil 20 vor, sodass das Antriebselement 26 händisch durch einen Nutzer betätigt werden kann.

Durch Verdrehen des Antriebselements 26 können die Verstellelemente 24A, 24B zwischen einer ersten Stellung und einer zweiten Stellung an dem Gehäuseteil 20 verdreht werden. Ein Anzeigeelement 263 in Form einer Anzeigennase am äußeren Umfang des Antriebselements 26 zeigt einem Nutzer an, in welcher Stellung sich das Antriebselement 26 und somit die Verstellelemente 24A, 24B befinden.

Über einen Lagerzapfen 300 greift das zweite Verschlussteil 3 in angesetzter Stellung in eine Eingriffsöffnung 202 innerhalb des Lagerelements 204 des Gehäuseteils 20 des ersten Verschlussteils 2 ein. Über den Eingriff wird eine zusätzliche Abstützung der Verschlussteile 2, 3 zueinander geschaffen, sodass die Gehäuseteile 20, 30 in angesetzter Stellung eine definierte Lage zueinander einnehmen.

Bei dem dargestellten Ausführungsbeispiel läuft der Bundabschnitt 242 eines jeden Verstellelements 24A, 24B an der Basis 244 um. Der Bundabschnitt 242 trägt hierbei einen radial nach innen vorspringenden Eingriffsvorsprung 243, der in der Schließstellung der Verschlussvorrichtung 1 mit dem Eingriffsvorsprung 310 des jeweils zugeordneten Eingriffselements 31A, 31B in Eingriff gelangt und somit eine Verbindung zwischen den Verschlussteilen 2, 3 herstellt.

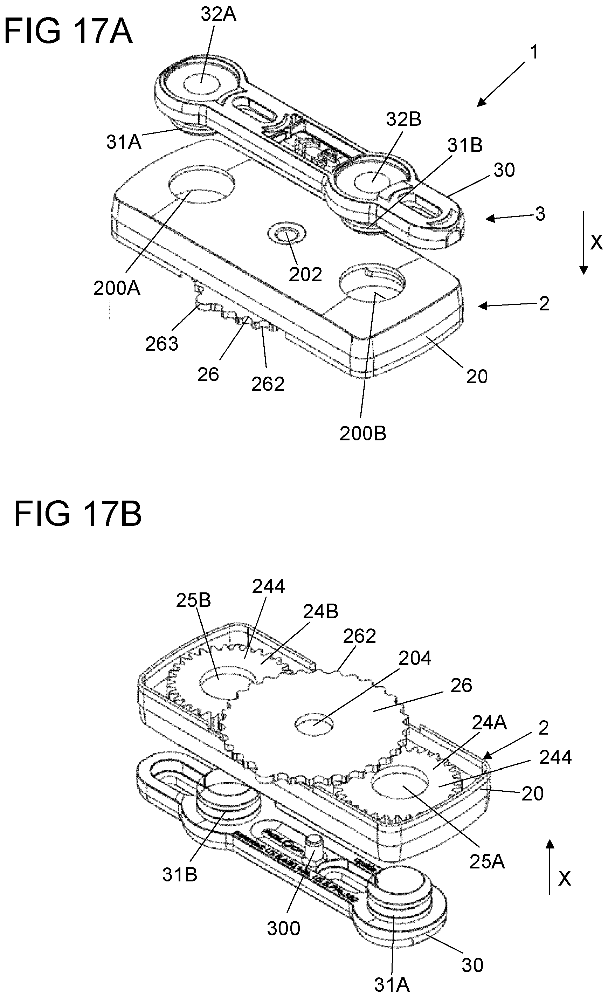

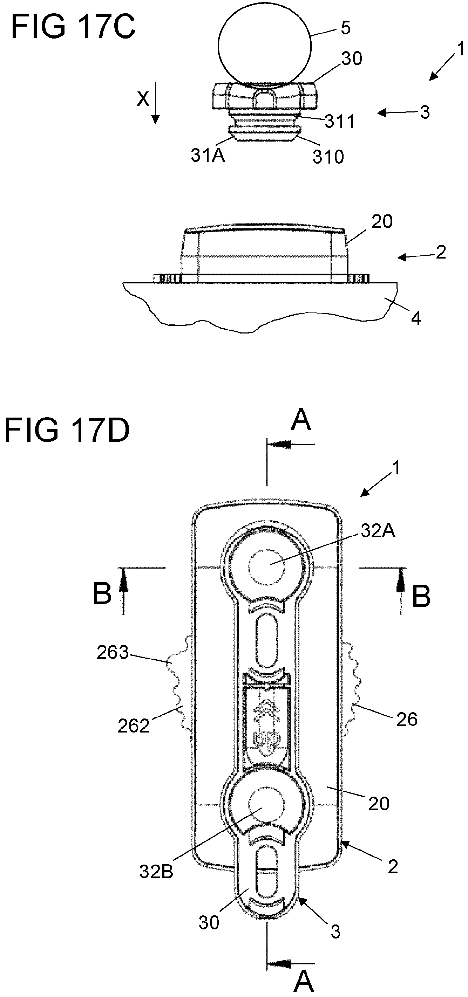

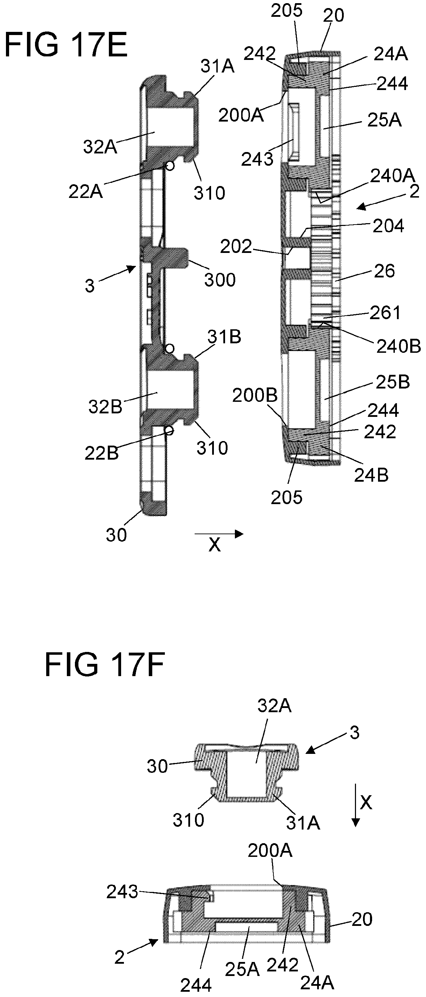

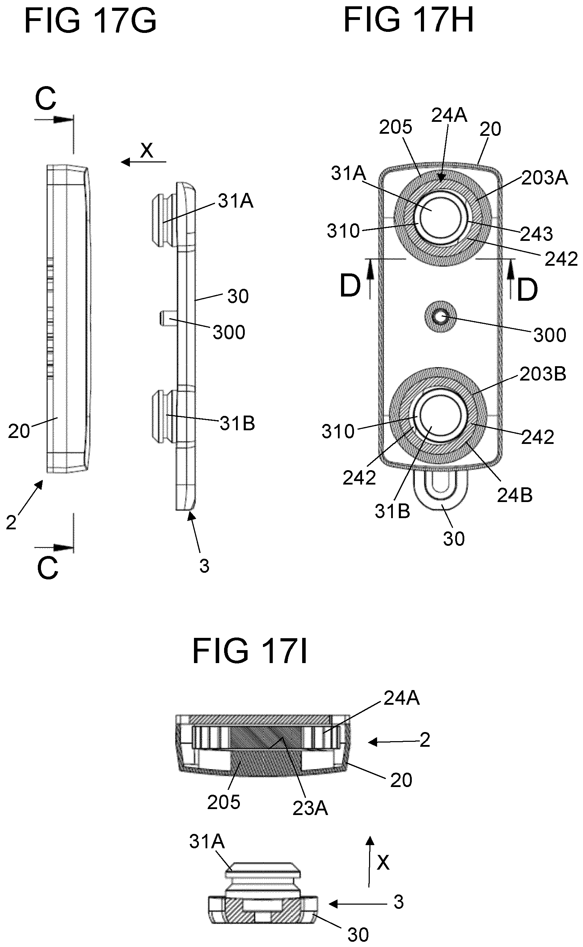

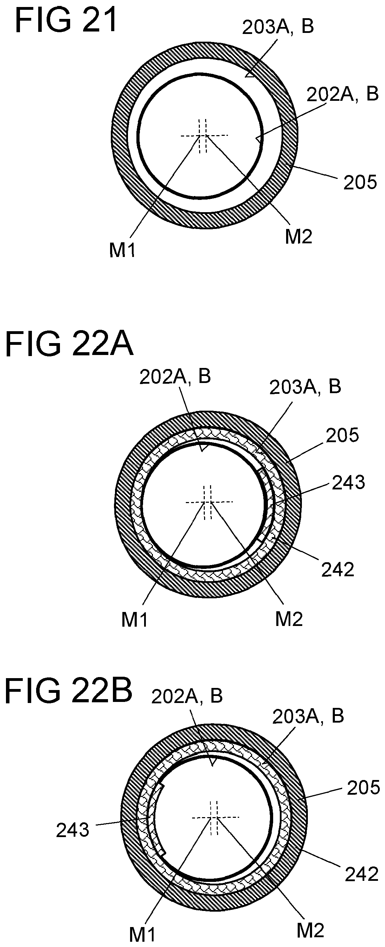

Über den Bundabschnitt 242 ist ein jedes Verstellelement 24A, 24B in der zugeordneten Lageröffnung 203A, 203B des Gehäuseteils 20 aufgenommen und dadurch drehbar an dem Gehäuseteil 20 gelagert. Wie dies zum Beispiel aus Fig. 17H in Zusammenschau mit den Skizzen gemäß Fig. 21 und Fig. 22A, 22B ersichtlich ist, ist ein jedes Verstellelement 24A, 24B hierbei exzentrisch zu der jeweils zugeordneten Stecköffnung 200A, 200B gelagert, sodass die Verdrehbewegung des Verstellelements 24A, 24B exzentrisch zu der Stecköffnung 200A, 200B erfolgt.

Dies ist in Fig. 21 und Fig. 22A, 22B veranschaulicht.

So weist eine jede Stecköffnung 200A, 200B ein Zentrum M1 auf, das durch den Mittelpunkt der Stecköffnung 200A, 200B gebildet ist. In eingesteckter Stellung ist das zugeordnete Eingriffselement 31A, 31B des zweiten Verschlussteils 3 konzentrisch zu diesem Zentrum M1 in die Stecköffnung 200A, 200B eingesetzt.

Die drehende Lagerung des Verstellelements 24A, 24B ist hierbei exzentrisch zu dem Zentrum M1 der Stecköffnung 200A, 200B. So ist das Verstellelement 24A, 24B um eine Drehachse M2 drehbar gelagert, die in einer zur Schließrichtung X senkrechten Ebene zu dem Zentrum M1 beabstandet ist, wie dies aus Fig. 21 und Fig. 22A, 22B ersichtlich ist.

Aufgrund der exzentrischen Lagerung nimmt das Verstellelement 24A, 24B in seiner ersten Stellung eine solche Lage zu der Stecköffnung 200A, 200B ein, dass der Eingriffsvorsprung 243 nicht in den Bereich der Stecköffnung 200A, 200B ragt (betrachtet entlang der zur Schließrichtung X senkrechten Zeichnungsebene gemäß Fig. 22A, 22B), wie dies aus Fig. 22A ersichtlich ist. Durch Verdrehen des Verstellelements 24A, 24B wird der Eingriffsvorsprung 243 relativ zu der Stecköffnung 200A, 200B bewegt und ragt in der zweiten Stellung gemäß Fig. 22B radial nach innen in die Stecköffnung 200A, 200B hinein, sodass der Eingriffsvorsprung 243 in Eingriff mit dem Eingriffsvorsprung 310 des Eingriffselements 31A, 31B ist und somit das Eingriffselement 31A, 31B formschlüssig entlang der Schließrichtung X an dem ersten Verschlussteil 2 festgelegt ist.

Das Verstellen der Verstellelemente 24A, 24B erfolgt bei dem dargestellten Ausführungsbeispiel händisch durch einen Nutzer durch Betätigen des Antriebselements 26. In der ersten Stellung (Fig. 22A) können die Eingriffselemente 31A, 31B in die Stecköffnungen 200A, 200B am Gehäuse 20 eingesetzt werden. Durch Überführen der Verstellelemente 24A, 24B kann ein Nutzer sodann die Verschlussvorrichtung 1 sperren, sodass in der zweiten Stellung der Verstellelemente 24A, 24B die Eingriffselemente 31A, 31B in den Stecköffnungen 200A, 200B gesperrt und die Verschlussteile 2, 3 somit aneinandergehalten sind.

Fig. 17A-17I zeigen die Verschlussvorrichtung 1 vor dem Schließen. Die Verschlussteile 2, 3 werden entlang der Schließrichtung X aneinander angesetzt, sodass dadurch die Eingriffselemente 31A, 31B in die Stecköffnungen 200A, 200B eingeführt werden. Die Verstellelemente 24A, 24B befinden sich hierbei in ihrer ersten Stellung (entsprechend der Stellung gemäß Fig. 22A).

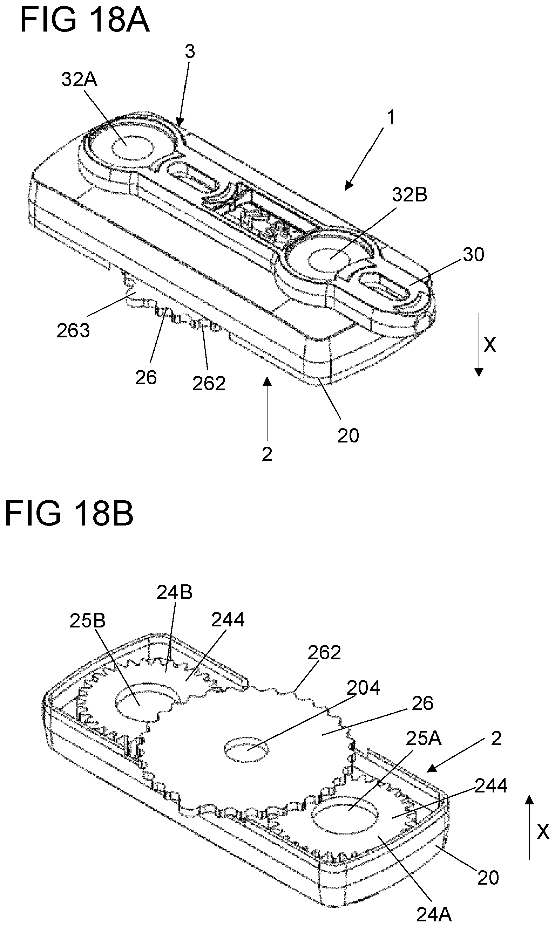

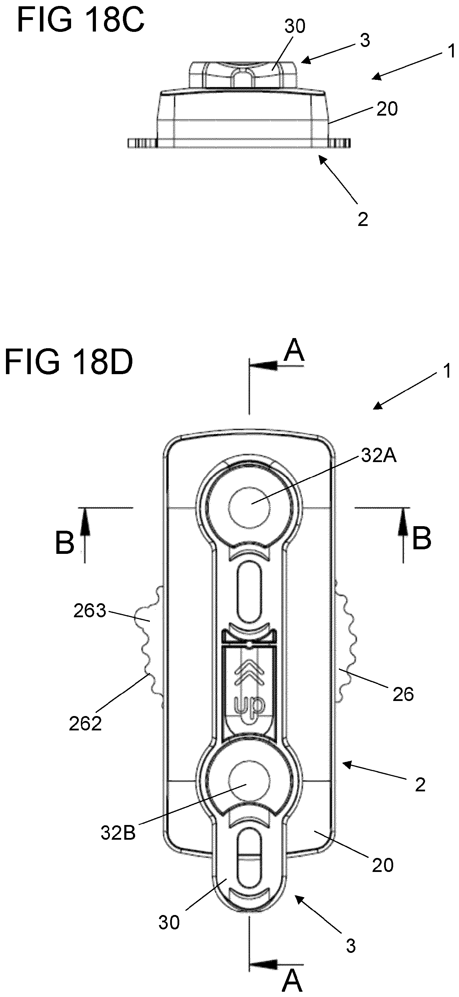

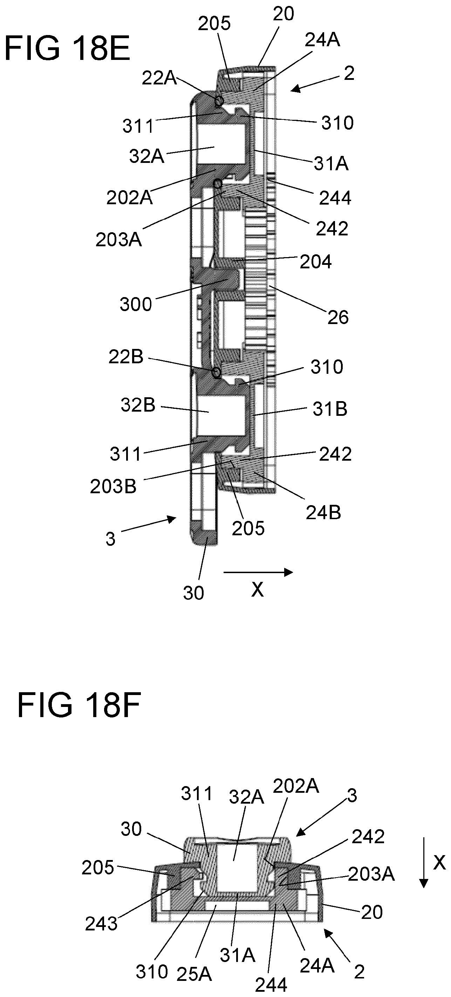

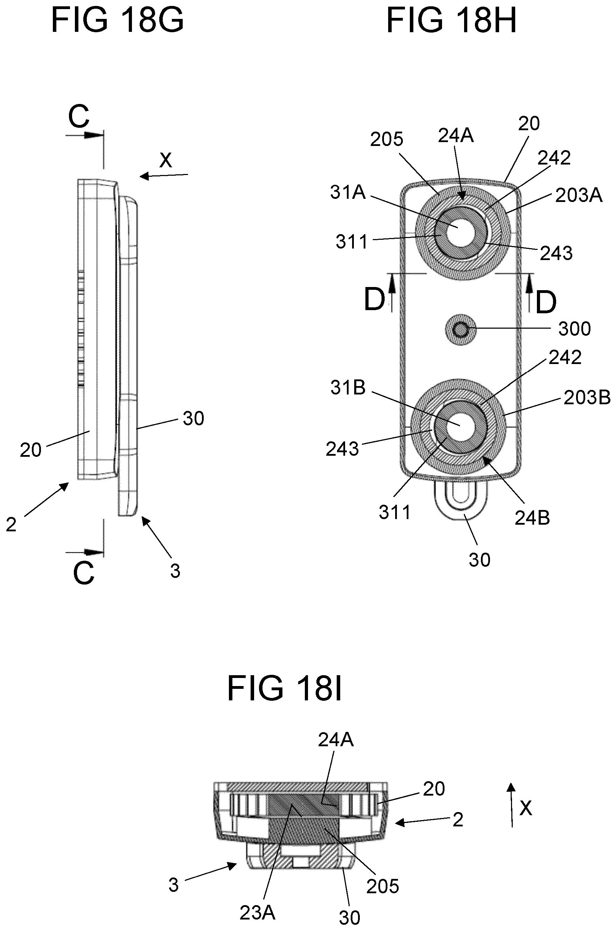

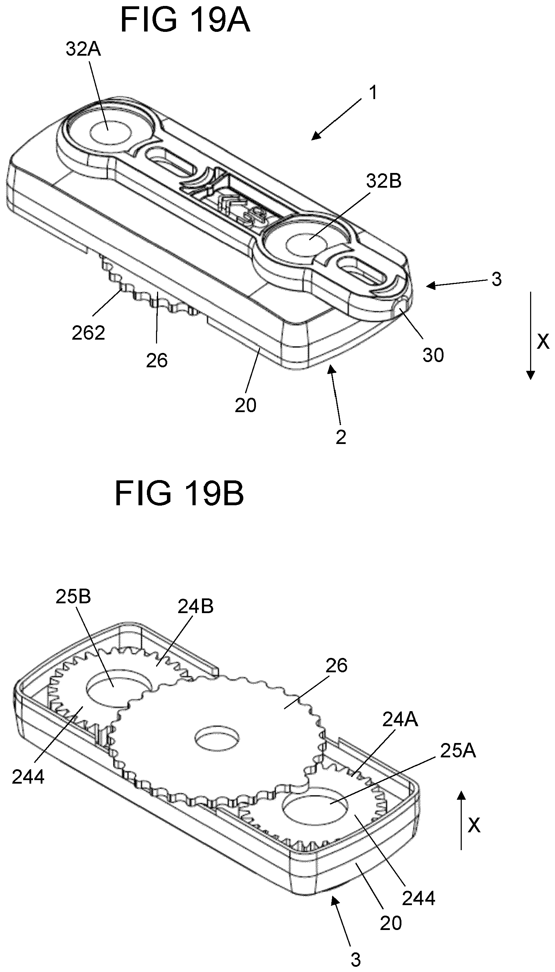

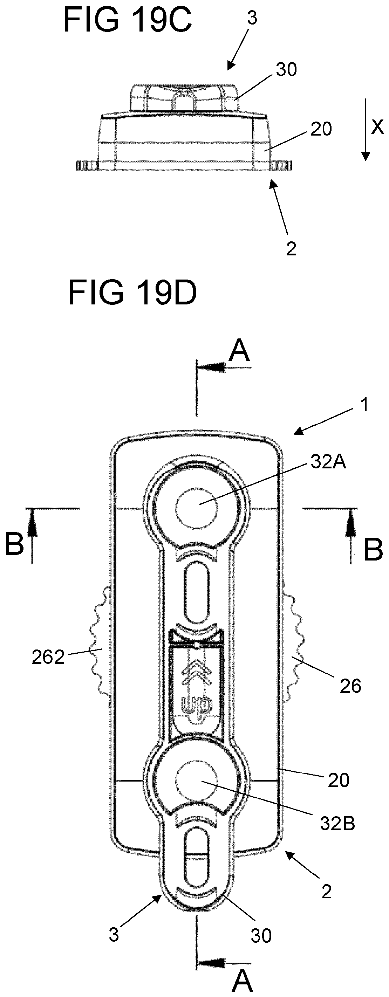

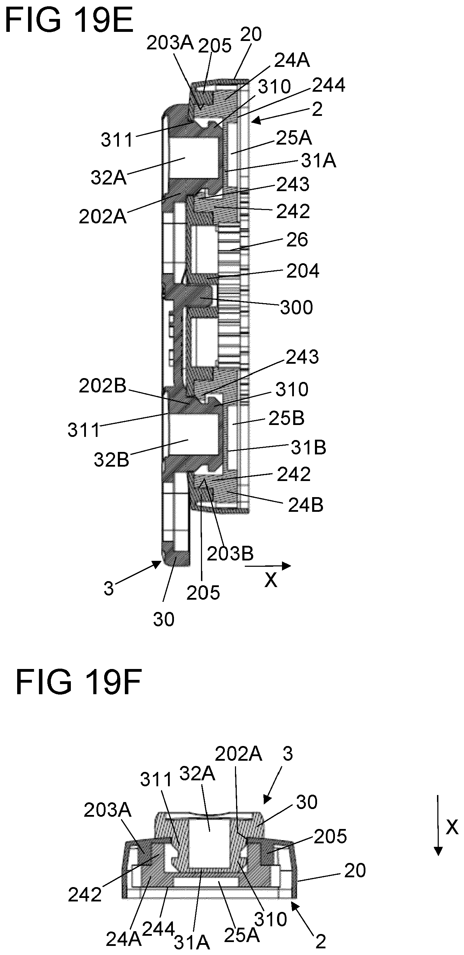

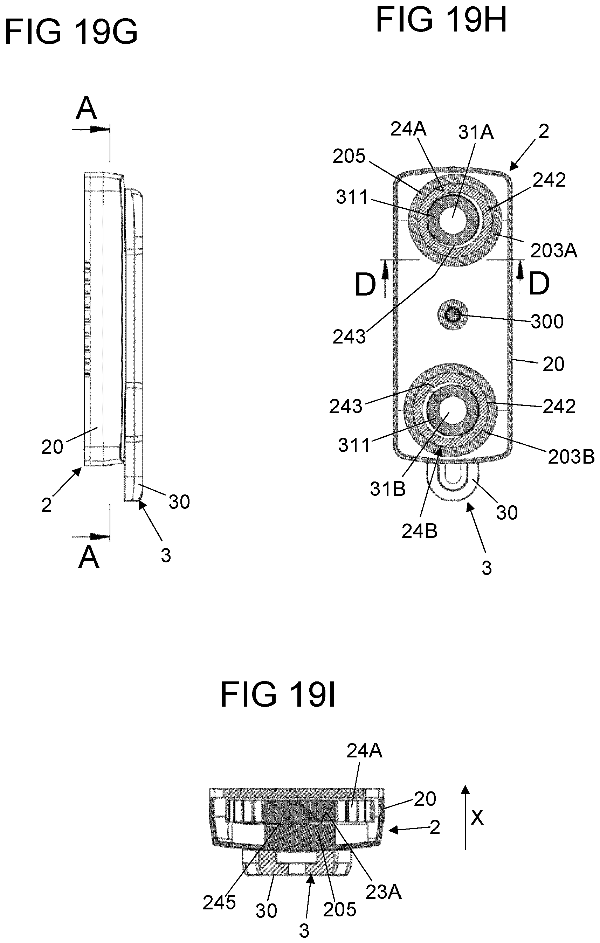

Sind die Eingriffselemente 31A, 31 B in die Stecköffnungen 200A, 200B eingesetzt worden, wie dies aus Fig. 18A-18I ersichtlich ist, so kann ein Nutzer das Antriebselement 26 verdrehen, indem der Nutzer das Antriebselement 26 zum Beispiel mit seinen Fingern bewegt. Dadurch werden die Verstellelemente 24A, 24B an dem Gehäuseteil 20 verdreht, wie dies aus Fig. 19A-19I ersichtlich ist.

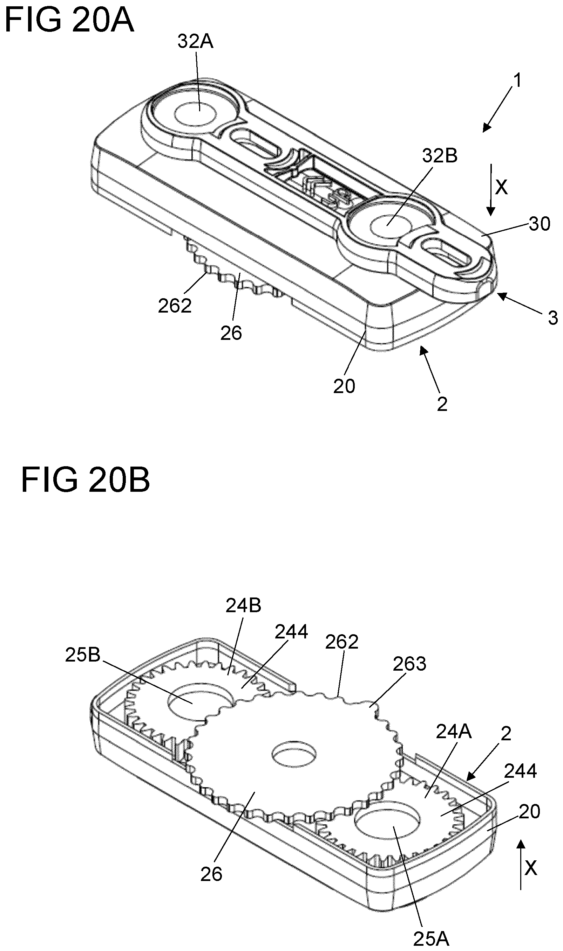

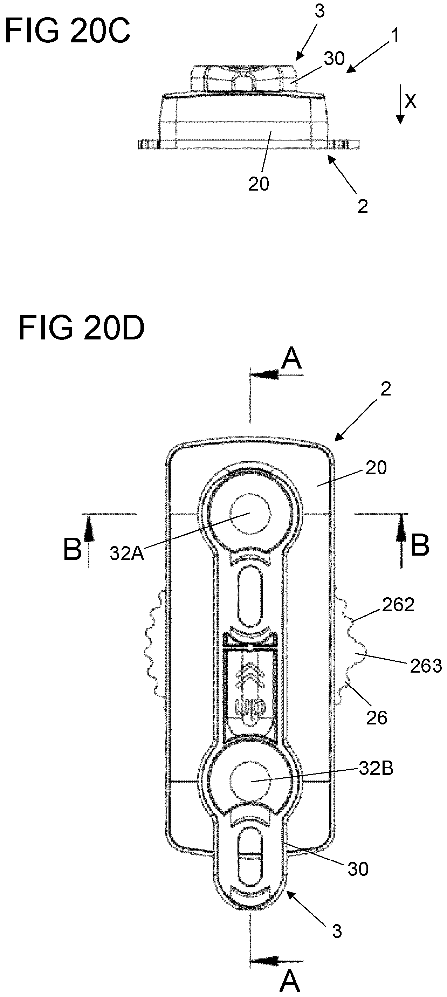

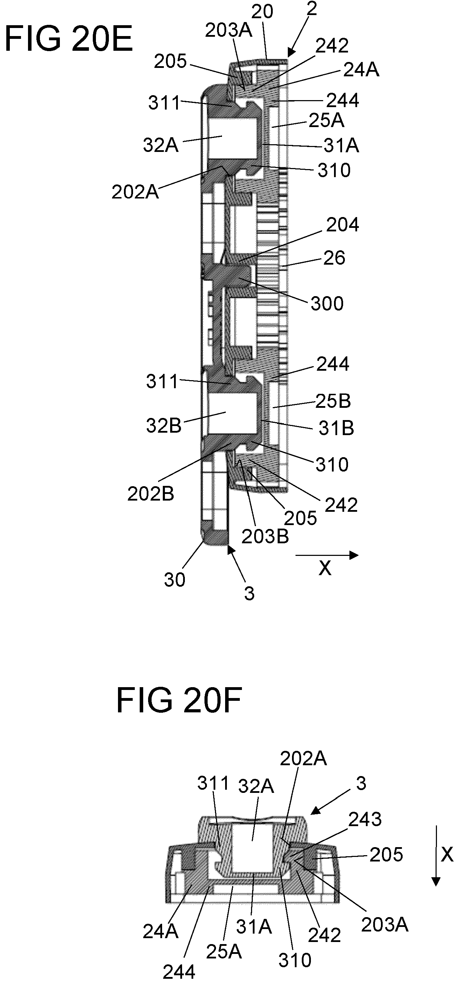

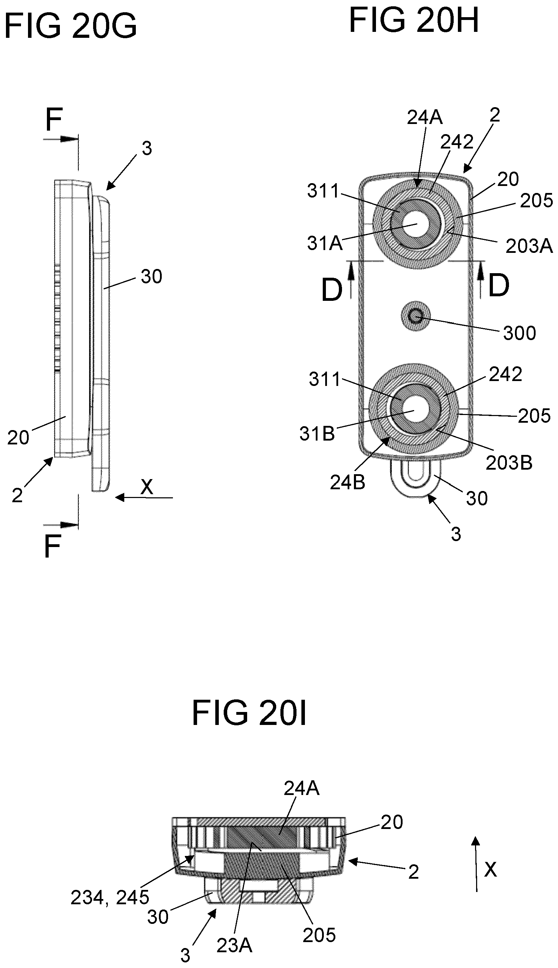

Fig. 20A-20I zeigen die Verschlussvorrichtung 1 in der Schließstellung, in der die Verstellelemente 24A, 24B so an dem Gehäuseteil 20 verdreht sind, dass die Verstellelemente 24A, 24B die Stellung gemäß Fig. 22B einnehmen und somit den Eingriff mit den Eingriffselementen 31A, 31B herstellen. Die Verschlussteile 2, 3 sind somit entlang der Schließrichtung X aneinander gehalten und können nicht ohne weiteres voneinander gelöst werden, jedenfalls nicht ohne Zurückbewegen der Verstellelemente 24A, 24B in die erste Stellung.

Wie vorangehend anhand des Ausführungsbeispiels gemäß Fig. 1-14 beschrieben, werden die Verstellelemente 24A, 24B bei einem Verdrehen aus der ersten Stellung in die zweite Stellung auch axial an dem Gehäuseteil 20 verstellt. Hierzu sind an den Verstellelementen 24A, 24B Auflaufabschnitte 241 mit Rampenabschnitten 245 geformt, wie dies aus Fig. 2 ersichtlich ist, die bei einem Verdrehen der Verstellelemente 24A, 24B an Auflaufelementen 23A, 23B gleiten, die integral an den Stirnseiten der Lagerbünde 205 geformt sind, wie dies aus den perspektivischen Explosionsansichten gemäß Fig. 15 und 16 ersichtlich ist.

Wie aus der Schnittansicht gemäß Fig. 17E ersichtlich, sind die Verstellelemente 24A, 24B in ihrer ersten Stellung axial den Lagerbünden 205 angenähert. Bei einem Verdrehen laufen die Auflaufabschnitte 241 mit den daran geformten Rampenabschnitten 245 auf zugeordnete Rampenabschnitte 232 an den Auflaufelementen 23A, 23B auf, sodass in der zweiten Stellung die Verstellelemente 24A, 24B axial um einen gewissen Weg von den Lagerbünden 205 entfernt sind, wie dies aus der Schnittansicht gemäß Fig. 20E ersichtlich ist.

Wie schematisch in Fig. 17E eingezeichnet, kann beispielsweise an einem jeden Eingriffselement 31A, 31B ein Elastizitätselement 22A, 22B zum Beispiel in Form eines elastisch verformbaren Ringelements angeordnet sein. Werden die Verstellelemente 24A, 24B axial beim Verdrehen in die zweite Stellung an dem Gehäuseteil 20 verstellt, werden die Eingriffselemente 31A, 31B in die Schließrichtung X in die Stecköffnungen 200A, 200B hineingezogen, sodass die Elastizitätselemente 22A, 22B unter elastischer Verspannung mit der Oberseite des Gehäuseteils 20 in Anlage gelangen und somit die Verschlussteile 2, 3 elastisch zueinander verspannt werden.

Zum Öffnen der Verschlussrichtung 1 werden die Verstellelemente 24A, 24B aus der zweiten Stellung (Fig. 20A-20I) zurück in die erste Stellung (Fig. 17A-17I) verdreht, sodass der Eingriff der Eingriffsvorsprünge 243, 310 aufgehoben wird und die Verschlussteile 2, 3 entlang der Schließrichtung X voneinander abgenommen werden können.

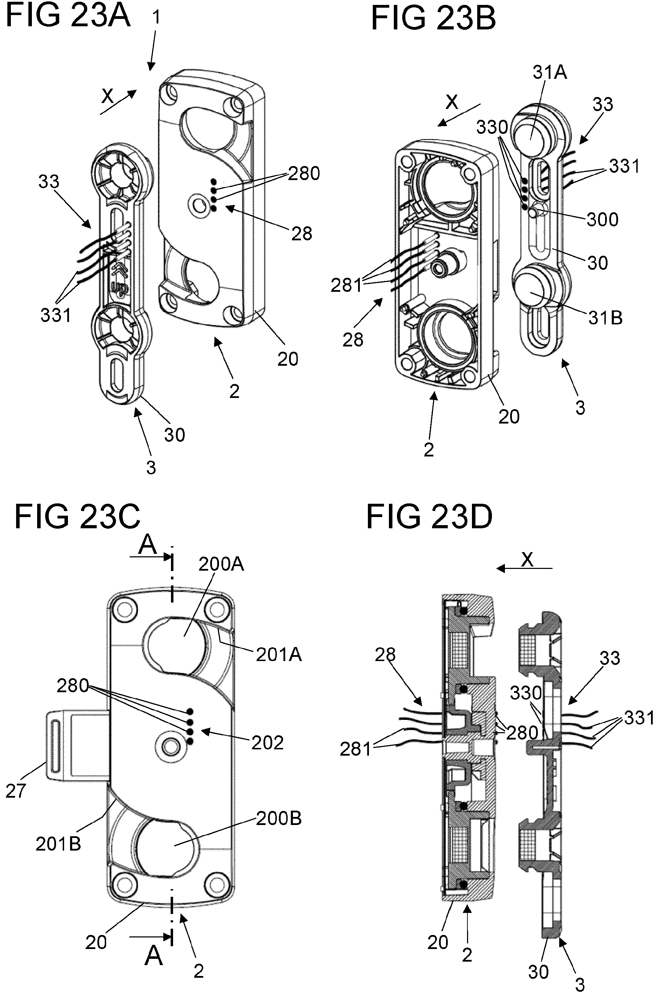

Bei den vorangehend beschriebenen Ausführungsbeispielen kann die Verschlussvorrichtung 1 als elektrische Verschlussvorrichtung mit elektrischen Kontakten ausgebildet sein, sodass bei Verbinden der Verschlussteile 2, 3 (auch) eine elektrische Verbindung hergestellt wird. Dies ist anhand der Ausführungsbeispiele nach Fig. 23A-23D bis 26A-26C veranschaulicht.

Das Ausführungsbeispiel gemäß Fig. 23A-23D entspricht funktional dem Ausführungsbeispiel der Verschlussvorrichtung 1 gemäß Fig. 1 bis 14A-14D, sodass zur funktionalen Ausgestaltung der Verschlussvorrichtung 1 auf die vorangehenden Erläuterungen verwiesen wird.

Bei dem dargestellten Ausführungsbeispiel sind an den Verschlussteilen 2, 3 zusätzlich Kontaktanordnungen 28, 33 angeordnet, die durch Kontaktelemente 280, 330 an den jeweiligen Gehäuseteilen 20, 30 gebildet sind. Werden die Verschlussteile 2, 3 zum Schließen der Verschlussvorrichtung 1 entlang der Schließrichtung X aneinander angesetzt, gelangen die Kontakte 28, 33 miteinander in elektrischen Kontakt, sodass eine (bei dem dargestellten Ausführungsbeispiel) vierpolige elektrische Verbindung zwischen den Kontaktanordnungen 28, 33 hergestellt wird. Leitungen 281, 331 werden somit elektrisch miteinander verbunden, sodass Ströme übertragen werden können, beispielsweise zur Übertragung von Steuersignalen oder eines elektrischen Versorgungstroms.

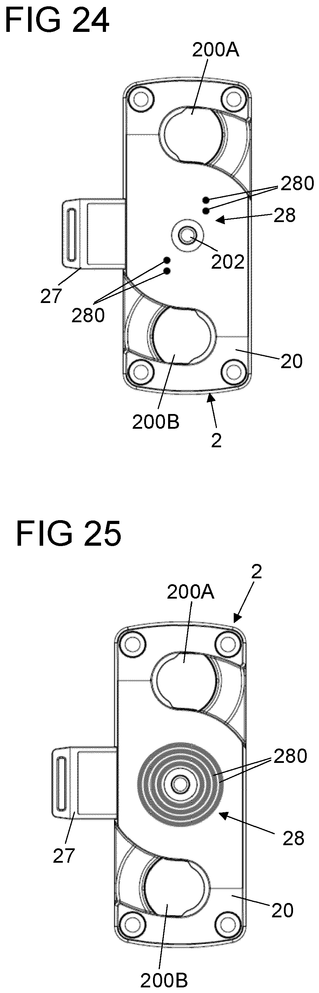

Die Ausführungsbeispiele gemäß Fig. 24 und Fig. 25 unterscheiden sich durch die Anordnung der elektrischen Kontakte 280 an dem Gehäuseteil 20 des Verschlussteils 2 (wobei das Verschlussteil 3 an dem Gehäuse 30 entsprechend angeordnete Kontakte 330 aufweist). Bei dem Ausführungsbeispiel nach Fig. 24 sind zwei Paare von Kontakten 280 diametral gegenüberliegend zu der Eingriffsöffnung 202 an dem Gehäuseteil 20 angeordnet. Bei dem Ausführungsbeispiel nach Fig. 25 sind die Kontakte 280 durch ringförmige Kontakte ausgebildet.

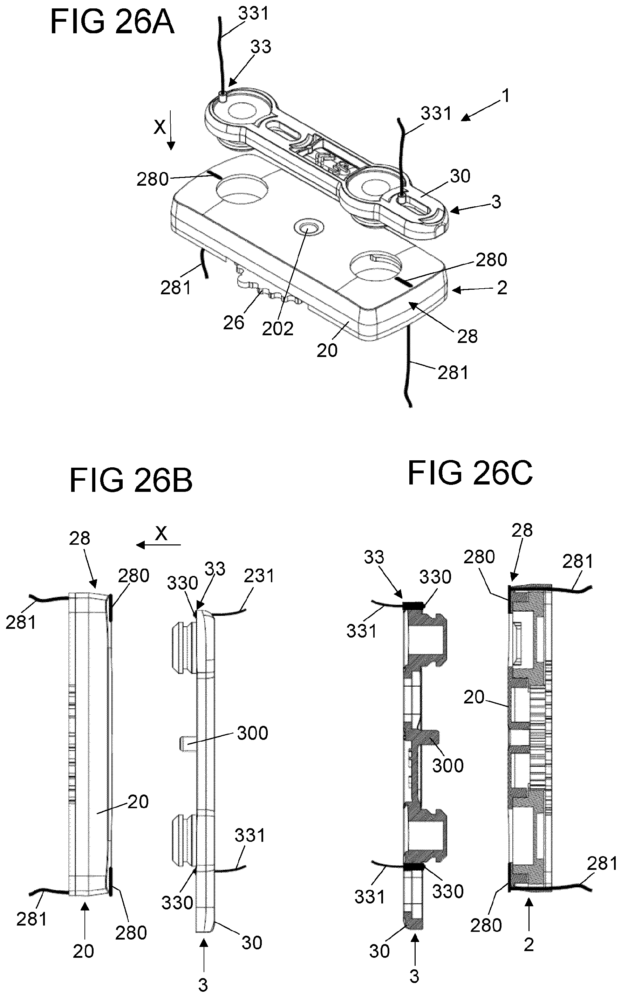

Das Ausführungsbeispiel nach Fig. 26A-26C entspricht funktional dem Ausführungsbeispiel nach Fig. 15 bis 22A, 22B. An den Gehäuseteilen 20, 30 der Verschlussteile 2, 3 sind dabei zusätzlich Kontaktanordnungen 28, 33 mit Kontakten 280, 330 angeordnet, wobei bei dem dargestellten Ausführungsbeispiel an jedem Gehäuseteil 20, 30 zwei Kontakte 280, 330 angeordnet sind, die jeweils mit einer elektrischen Leitung 281, 331 elektrisch verbunden sind. Bei Schließen der Verschlussvorrichtung 1 durch Ansetzen der Verschlussteile 2, 3 entlang der Schließrichtung X aneinander gelangen die Kontakte 280, 330 elektrisch miteinander in Kontakt.

Bei allen Ausführungsbeispielen kann eine beliebige Anzahl von Kontakten 280, 330 vorgesehen sein, zum Beispiel zwei, drei, vier, sieben oder auch noch mehr Kontakte.

Bei dem in Fig. 1 bis 14A-14D dargestellten Ausführungsbeispiel sind die Stecköffnungen 200A, 200B durch Ausgangsöffnungen 201A, 201B seitlich geöffnet, sodass die Verschlussteile 2, 3 durch Verdrehen um die zentrale Drehachse D relativ zueinander geöffnet werden können. Durch Verdrehen der Verschlussteile 2, 3 um die Drehachse D gelangen die Eingriffselemente 31A, 31B durch die Ausgangsöffnungen 201A, 201B hindurch aus den Stecköffnungen 200A, 200B heraus, sodass der Eingriff der Eingriffsvorsprünge 243, 310 aufgehoben und die Verschlussvorrichtung 1 somit geöffnet wird.

Bei dem Ausführungsbeispiel nach Fig. 1 bis 14A-14D sind die Ausgangsöffnungen 201A, 201B an unterschiedlichen Seiten des Gehäuseteils 20 angeordnet, sodass die Stecköffnungen 200A, 200B in entgegengesetzte Richtungen offen sind. Die Ausgangsöffnungen 201A, 201B liegen sich hierbei diametral zur an der Eingriffsöffnung 202 gebildeten Drehachse D gegenüber. Dies ermöglicht ein Verdrehen der Verschlussteile 2, 3 zueinander um die Drehachse D, um auf diese Weise die Eingriffselemente 31A, 31B durch die Ausgangsöffnungen 201A, 201B hindurch zu bewegen und die Verschlussvorrichtung 1 somit zu öffnen.

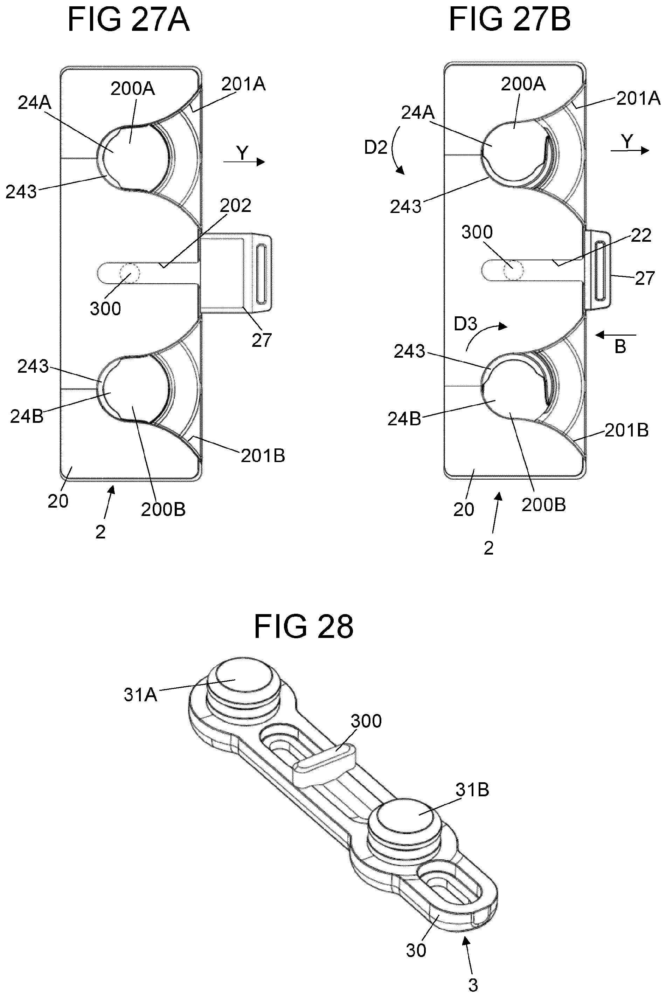

Während bei dem Ausführungsbeispiel nach Fig. 1 bis 14A-14D das Öffnen der Verschlussvorrichtung 1 durch Verdrehen der Verschlussteile 2, 3 um die Drehachse D relativ zueinander erfolgt, ist auch denkbar, die Verschlussvorrichtung 1 so auszugestalten, dass die Verschlussrichtung 1 durch Parallelverschiebung der Verschlussteile 2, 3 geöffnet werden kann. Dies ist anhand von Fig. 27A und 27B veranschaulicht.

Bei diesem Ausführungsbeispiel sind die Stecköffnungen 200A, 200B durch Ausgangsöffnungen 201A, 201B geöffnet, die gleichgerichtet an der gleichen Seite des Gehäuseteils 20 angeordnet sind und ermöglichen, das zweite Verschlussteil 3 durch Parallelverschiebung in die Öffnungsrichtung Y zu dem Gehäuseteil 2 zu verschieben, um auf diese Weise die Eingriffselemente 31A, 31B des zweiten Verschlussteils 3 in die Öffnungsrichtung Y aus den Stecköffnungen 200A, 200B zu entfernen.

Wiederum sind an den Stecköffnungen 200A, 200B Verstellelemente 24A, 24B angeordnet, die drehbar an dem Gehäuseteil 20 gelagert sind und mit einem Betätigungselement 27 in Wirkverbindung stehen derart, dass durch lineares Verstellen des Betätigungselements 27 in eine Betätigungsrichtung B die Verstellelemente 24A, 24B in Drehrichtungen D2, D3 aus der ersten Stellung (Fig. 27A) in die jeweils zugeordnete zweite Stellung (Fig. 27B) verstellt werden können.

Das Betätigungselement 27 kann auf der den Ausgangsöffnungen 201A, 201B zugeordneten Seite des Gehäuseteils 20 angeordnet sein, wie bei dem dargestellten Ausführungsbeispiel. Das Betätigungselement 27 kann aber auch auf der anderen, abgewandten Seite (in Fig. 27A, 27B links) des Gehäuseteils 20 angeordnet sein.

Bei dem dargestellten Ausführungsbeispiel ist die Eingriffsöffnung 202 an dem Gehäuseteil 20 durch ein in die Öffnungsrichtung Y geöffnetes Langloch ausgebildet, in das das zweite Verschlussteil 3 mit dem Lagerzapfen 300 beim Schließen der Verschlussvorrichtung 1 in Eingriff gelangt. Bei Parallelverschiebung der Verschlussteile 2, 3 relativ zueinander wird der Lagerzapfen 300 in der Eingriffsöffnung 202 in die Öffnungsrichtung Y verstellt, sodass darüber die Verschiebebewegung der Verschlussteile 2, 3 relativ zueinander geführt ist.

Bei den vorangehend beschriebenen Ausführungsbeispielen ist der Lagerzapfen 300 durch einen zylindrischen Zapfen ausgebildet. Wie dies in Fig. 28 veranschaulicht ist, kann bei dem Ausführungsbeispiel der Verschlussvorrichtung 1 nach Fig. 27A, 27B der Lagerzapfen 300 aber auch als längserstreckter Steg ausgebildet sein, der eine verbesserte Längsführung zum Führen der Verschiebebewegung in die Öffnungsrichtung Y für das Verstellteil 3 schafft.

Ansonsten, insbesondere mit Blick auf die Funktion der Verstellelemente 24A, 24B, wird auf die vorangehenden Erläuterungen zum Ausführungsbeispiel nach Fig. 1 bis 14A-14D verwiesen.

Der der Erfindung zugrunde liegende Gedanke ist nicht auf die vorangehend beschriebenen Ausführungsbeispiele beschränkt, sondern lässt sich auch in anderer Weise verwirklichen.

Eine Verschlussvorrichtung der beschriebenen Art kann beispielsweise an einem Fahrzeug, zum Beispiel an einem Fahrrad, beispielsweise einem elektrisch angetriebenen Farbrad (E-Bike) zum Einsatz kommen.

Beispielsweise kann eine Verschlussvorrichtung der beschriebenen Art zum Verbinden einer elektrischen Baugruppe mit einem Fahrradrahmen eingesetzt werden, zum Beispiel zum lösbaren Verbinden einer Batterieanordnung mit dem Fahrradrahmen.

Die Verschlussvorrichtung kann wie bei den dargestellten Ausführungsbeispielen als magnetische Verschlussvorrichtung mit magnetischen Elementen ausgebildet sein. Denkbar ist aber auch, die Verschlussvorrichtung als rein mechanische Verschlussvorrichtung unter Weglassen der magnetischen Elemente auszugestalten.

### Bezugszeichenliste

- 1: Verschlussvorrichtung
- 2: Verschlussteil
- 20: Gehäuseteil
- 200A, B: Stecköffnung
- 201A, B: Ausgangsöffnung
- 202: Eingriffsöffnung
- 203A, B: Lageröffnung
- 204: Lagerelement
- 205: Lagerbund
- 21: Abdeckelement
- 22A, B: Elastizitätselement
- 23A, B: Auflaufelement
- 230: Formschlusselement
- 231: Ringkörper
- 232: Auflaufabschnitt
- 233: Plateau
- 234: Rampe
- 235: Plateau
- 24A, B: Verstellelement
- 240A, B: Verzahnungsabschnitt
- 241: Auflaufabschnitt
- 242: Starrer Bundabschnitt
- 243: Eingriffsvorsprung
- 244: Basis
- 245: Rampenabschnitt
- 246: Plateau
- 25A, B: Magnetelement
- 26: Antriebselement
- 260: Verzahnungsabschnitt
- 261, 261A, B: Verzahnungsabschnitt
- 262: Riffelabschnitt
- 263: Anzeigeelement
- 264: Lageröffnung
- 27: Betätigungselement
- 270: Verzahnungsabschnitt
- 28: Kontaktanordnung
- 280: Kontaktelemente
- 281: Leitungen
- 3: Verschlussteil
- 30: Grundkörper
- 300: Lagerzapfen
- 31A, B: Eingriffselement
- 310: Eingriffsvorsprung
- 311: Schaftabschnitt
- 32A, B: Magnetelement
- 33: Kontaktanordnung
- 330: Kontaktelemente331 Leitungen
- 4, 5: Baugruppen
- D: Drehachse
- D1-D3: Drehbewegung
- M1: Zentrum
- M2: Drehachse
- X: Schließrichtung
- Y: Öffnungsrichtung

## Patentansprüche

1. Verschlussvorrichtung (1) zum Verbinden zweier Baugruppen (4, 5) miteinander, mit
einem einer ersten der Baugruppen (4, 5) zugeordneten, ersten Verschlussteil (2), das ein Gehäuseteil (20), zumindest einen ersten Eingriffsvorsprung (243) und ein an dem Gehäuseteil (20) verstellbar angeordnetes Verstellelement (24A, 24B) aufweist, und
einem einer zweiten der Baugruppen (4, 5) zugeordneten, zweiten Verschlussteil (2), das ein Eingriffselement (31A, 31B) mit zumindest einem zweiten Eingriffsvorsprung (310) aufweist,
wobei das erste Verschlussteil (2) und das zweite Verschlussteil (3) zum Schließen der Verschlussvorrichtung (1) entlang einer Schließrichtung (X) aneinander ansetzbar sind, in einer Schließstellung der zumindest eine erste Eingriffsvorsprung (243) mit dem zumindest einen zweiten Eingriffsvorsprung (310) zum Halten des ersten Verschlussteils (2) und des zweiten Verschlussteils (3) entgegen der Schließrichtung (X) aneinander in Eingriff steht und das erste Verschlussteil (2) und das zweite Verschlussteil (3) zum Öffnen der Verschlussvorrichtung (1) voneinander trennbar sind,
wobei
das Verstellelement (24A, 24B) zwischen einer ersten Stellung und einer zweiten Stellung verstellbar an dem Gehäuseteil (20) des ersten Verschlussteils (2) angeordnet ist, wobei das Verstellelement (24A, 24B) ausgebildet ist, in der ersten Stellung ein Ansetzen des ersten Verschlussteils (2) und des zweiten Verschlussteils (3) zum Schließen der Verschlussvorrichtung (1) entlang der Schließrichtung (X) aneinander zu ermöglichen, wobei das Verstellelement (24A, 24B), wenn das erste Verschlussteil (2) und das zweite Verschlussteil (3) aneinander angesetzt sind, aus der ersten Stellung in die zweite Stellung überführbar ist, um in der zweiten Stellung eine Vorspannkraft entlang der Schließrichtung (X) auf das Eingriffselement (31A, 31B) auszuüben,
wobei das Gehäuseteil (20) eine Stecköffnung (200A, 200B) aufweist, in die das Eingriffselement (31A, 31B) des zweiten Verschlussteils (3) entlang der Schließrichtung (X) zum Schließen der Verschlussvorrichtung (1) einsetzbar ist.

2. Verschlussvorrichtung (1) nach Anspruch 1, **dadurch gekennzeichnet, dass** der zumindest eine erste Eingriffsvorsprung (243) an dem Verstellelement (24A, 24B) angeordnet und gemeinsam mit dem Verstellelement (24A, 24B) relativ zu dem Gehäuseteil (20) verstellbar ist.

3. Verschlussvorrichtung (1) nach Anspruch 1 oder 2, **dadurch gekennzeichnet, dass** das Verstellelement (24A, 24B) eine Basis (244) und einen starr an der Basis (244) geformten, entlang der Schließrichtung (X) von der Basis (244) vorstehenden Bundabschnitt (242) aufweist.

4. Verschlussvorrichtung (1) nach einem der vorangehenden Ansprüche, **dadurch gekennzeichnet, dass** das Verstellelement (24A, 24B) zwischen der ersten Stellung und der zweiten Stellung zu dem Gehäuseteil (20) des ersten Verschlussteils (2) verdrehbar ist.

5. Verschlussvorrichtung (1) nach einem der vorangehenden Ansprüche, **dadurch gekennzeichnet, dass** das Verstellelement (24A, 24B) in der ersten Stellung eine erste Axialstellung zu dem Gehäuseteil (20) und in der zweiten Stellung eine von der ersten Axialstellung unterschiedliche, entlang der Schließrichtung (X) versetzte, zweite Axialstellung zu dem Gehäuseteil (20) einnimmt.

6. Verschlussvorrichtung (1) nach einem der vorangehenden Ansprüche, **dadurch gekennzeichnet, dass** das erste Verschlussteil (2) ein an dem Gehäuseteil (20) angeordnetes Auflaufelement (23A, 23B) mit einem ersten Rampenabschnitt (232) und das Verstellelement (24A, 24B) einen Auflaufabschnitt (241) mit einem zweiten Rampenabschnitt (245) aufweist, wobei der erste Rampenabschnitt (245) bei einem Verstellen des Verstellelements (24A, 24B) zum Axialverstellen des Verstellelements (24A, 24B) an dem zweiten Rampenabschnitt (245) gleitet.

7. Verschlussvorrichtung (1) nach einem der vorangehenden Ansprüche, **dadurch gekennzeichnet, dass** das erste Verschlussteil (2) ein Betätigungselement (27) aufweist, das betätigbar ist, um das Verstellelement (24A, 24B) zwischen der ersten Stellung und der zweiten Stellung zu verstellen.

8. Verschlussvorrichtung (1) nach einem der vorangehenden Ansprüche, **dadurch gekennzeichnet, dass** das erste Verschlussteil (2) ein mit dem Verstellelement (24A, 24B) wirkverbundenes Antriebselement (26) aufweist, das ausgebildet ist, bei Betätigung eine Verstellkraft in das Verstellelement (24A, 24B) einzuleiten.

9. Verschlussvorrichtung (1) nach einem der vorangehenden Ansprüche, **dadurch gekennzeichnet, dass** die Stecköffnung (200A, 200B) durch eine Ausgangsöffnung (201A, 201B) in eine quer zur Schließrichtung (X) gerichtete Öffnungsrichtung (Y) geöffnet ist, wobei das Eingriffselement (31A, 31B) in der ersten Stellung des Verstellelements (24A, 24B) in die Öffnungsrichtung (Y) zum Öffnen der Verschlussvorrichtung (1) aus der Stecköffnung (X) bewegbar ist.

10. Verschlussvorrichtung (1) nach einem der vorangehenden Ansprüche, **dadurch gekennzeichnet, dass** die Stecköffnung (200A, 200B) ein Zentrum (M1) aufweist und das Verstellelement (24A, 24B) um eine zu dem Zentrum (M1) der Stecköffnung (200A, 200B) exzentrische Drehachse (M2) zwischen der ersten Stellung und der zweiten Stellung zu dem Gehäuseteil (20) des ersten Verschlussteils (2) verdrehbar ist, wobei das Verstellelement (24A, 24B) ausgebildet ist, in der zweiten Stellung den Eingriff zwischen dem zumindest einen ersten Eingriffsvorsprung (243) und dem zumindest einen zweiten Eingriffsvorsprung (310) zum Halten des ersten Verschlussteils (2) und des zweiten Verschlussteils (3) entgegen der Schließrichtung (X) aneinander herzustellen.

11. Verschlussvorrichtung (1) nach einem der vorangehenden Ansprüche, **dadurch gekennzeichnet, dass** das erste Verschlussteil (2) ein erstes magnetisches Element (25A, 25B) und das zweite Verschlussteil (2) ein zweites magnetisches Element (32A, 32B) aufweisen, wobei das erste magnetische Element (25A, 25B) und das zweite magnetische Element (32A, 32B) magnetisch anziehend zusammenwirken, um das Ansetzen des ersten Verschlussteils (2) und des zweiten Verschlussteils (3) zum Schließen der Verschlussvorrichtung (1) magnetisch zu unterstützen.

12. Verschlussvorrichtung (1) nach einem der vorangehenden Ansprüche, **dadurch gekennzeichnet, dass** das erste Verschlussteil (3) zwei Steckplätze mit je zumindest einem ersten Eingriffsvorsprung (243) und einem zu dem Gehäuseteil (20) verstellbaren Verstellelement (24A, 24B) aufweist, wobei das zweite Verschlussteil (3) zwei Eingriffselemente (31A, 31B) mit je zumindest einem zweiten Eingriffsvorsprung (310) aufweist, wobei zum Schließen der Verschlussvorrichtung (1) jedes der Eingriffselemente (31A, 31B) des zweiten Verschlussteils (3) an einen der Steckplätze des ersten Verschlussteils (2) ansetzbar ist und in der Schließstellung die ersten Eingriffsvorsprünge (243) mit den zweiten Eingriffsvorsprüngen (310) zum Halten des ersten Verschlussteils (2) und des zweiten Verschlussteils (3) entgegen der Schließrichtung (X) aneinander in Eingriff stehen.

13. Verschlussvorrichtung (1) nach Anspruch 12, **dadurch gekennzeichnet, dass** die Verstellelemente (24A, 24B) jeweils zwischen einer ersten Stellung und einer zweiten Stellung verstellbar an dem Gehäuseteil (20) des ersten Verschlussteils (2) angeordnet und ausgebildet sind, in der zweiten Stellung jeweils eine Vorspannkraft entlang der Schließrichtung (X) auf ein zugeordnetes der Eingriffselemente (31A, 31B) auszuüben.

14. Verschlussvorrichtung (1) nach Anspruch 12 oder 13, **dadurch gekennzeichnet, dass** die Verstellelemente (24A, 24B) über einen Betätigungsmechanismus des ersten Verschlussteils (2) gemeinsam verstellbar sind oder dass die Verstellelemente (24A, 24B) unabhängig voneinander verstellbar sind.

15. Verschlussvorrichtung (1) zum Verbinden zweier Baugruppen (4, 5) miteinander, mit
einem einer ersten der Baugruppen (4, 5) zugeordneten, ersten Verschlussteil (2), das ein Gehäuseteil (20), zumindest einen ersten Eingriffsvorsprung (243) und ein an dem Gehäuseteil (20) verstellbar angeordnetes Verstellelement (24A, 24B) aufweist, und
einem einer zweiten der Baugruppen (4, 5) zugeordneten, zweiten Verschlussteil (2), das ein Eingriffselement (31A, 31B) mit zumindest einem zweiten Eingriffsvorsprung (310) aufweist,
wobei das erste Verschlussteil (2) und das zweite Verschlussteil (3) zum Schließen der Verschlussvorrichtung (1) entlang einer Schließrichtung (X) aneinander ansetzbar sind, in einer Schließstellung der zumindest eine erste Eingriffsvorsprung (243) mit dem zumindest einen zweiten Eingriffsvorsprung (310) zum Halten des ersten Verschlussteils (2) und des zweiten Verschlussteils (3) entgegen der Schließrichtung (X) aneinander in Eingriff steht und das erste Verschlussteil (2) und das zweite Verschlussteil (3) zum Öffnen der Verschlussvorrichtung (1) voneinander trennbar sind,
wobei
das Verstellelement (24A, 24B) zwischen einer ersten Stellung und einer zweiten Stellung verstellbar an dem Gehäuseteil (20) des ersten Verschlussteils (2) angeordnet ist, wobei das Verstellelement (24A, 24B) ausgebildet ist, in der ersten Stellung ein Ansetzen des ersten Verschlussteils (2) und des zweiten Verschlussteils (3) zum Schließen der Verschlussvorrichtung (1) entlang der Schließrichtung (X) aneinander zu ermöglichen, wobei das Verstellelement (24A, 24B), wenn das erste Verschlussteil (2) und das zweite Verschlussteil (3) aneinander angesetzt sind, aus der ersten Stellung in die zweite Stellung überführbar ist, um in der zweiten Stellung eine Vorspannkraft entlang der Schließrichtung (X) auf das Eingriffselement (31A, 31B) auszuüben,
wobei eines des ersten Verschlussteils (2) und des zweiten Verschlussteils (3) einen Lagerzapfen (300) und das andere des ersten Verschlussteils (2) und des zweiten Verschlussteils (3) eine Eingriffsöffnung (202) aufweisen, wobei in der Schließstellung der Lagerzapfen (300) in die Eingriffsöffnung (202) eingreift und dadurch das erste Verschlussteil (2) und das zweite Verschlussteil (3) aneinander gelagert sind,
wobei zum Öffnen der Verschlussvorrichtung (1) der zumindest eine erste Eingriffsvorsprung (243) und der zumindest eine zweite Eingriffsvorsprung (310) durch Verschwenken des ersten Verschlussteils (2) und des zweiten Verschlussteils (3) relativ zueinander außer Eingriff voneinander bringbar sind.

## Claims

1. A closure device (1) for connecting two assemblies (4, 5) to each other, comprising
a first closure part (2) associated to a first one of the assemblies (4, 5), which includes a housing part (20), at least one first engaging protrusion (243) and an adjusting element (24A, 24B) adjustably arranged on the housing part (20), and
a second closure part (2) associated to a second one of the assemblies (4, 5), which includes an engaging element (31A, 31B) with at least one second engaging protrusion (310),
wherein the first closure part (2) and the second closure part (3) can be attached to each other along a closing direction (X) for closing the closure device (1), in a closed position the at least one first engaging protrusion (243) is in engagement with the at least one second engaging protrusion (310) for holding the first closure part (2) and the second closure part (3) at each other against the closing direction (X), and the first closure part (2) and the second closure part (3) can be separated from each other for opening the closure device (1),
wherein the adjusting element (24A, 24B) is arranged on the housing part (20) of the first closure part (2) so as to be adjusted between a first position and a second position, wherein the adjusting element (24A, 24B) in the first position is configured to provide for an attachment of the first closure part (2) and of the second closure part (3) to each other along the closing direction (X) for closing the closure device (1), wherein the adjusting element (24A, 24B), when the first closure part (2) and the second closure part (3) are attached to each other, can be transferred from the first position into the second position in order to exert a pretensioning force along the closing direction (X) on the engaging element (31A, 31B) in the second position,
wherein the housing part (20) includes a plug-in opening (200A, 200B) into which the engaging element (31A, 31B) of the second closure part (3) can be inserted along the closing direction (X) for closing the closure device (1).

2. The closure device (1) according to claim 1, **characterized in that** the at least one first engaging protrusion (243) is arranged on the adjusting element (24A, 24B) and can be adjusted relative to the housing part (20) jointly with the adjusting element (24A, 24B).

3. The closure device (1) according to claim 1 or 2, **characterized in that** the adjusting element (24A, 24B) includes a base (244) and a collar portion (242) rigidly formed on the base (244), which protrudes from the base (244) along the closing direction (X).

4. The closure device (1) according to any of the preceding claims, **characterized in that** the adjusting element (24A, 24B) can be rotated relative to the housing part (20) of the first closure part (2) between the first position and the second position.

5. The closure device (1) according to any of the preceding claims, **characterized in that** in the first position the adjusting element (24A, 24B) takes a first axial position relative to the housing part (20) and in the second position takes a second axial position relative to the housing part (20), which is different from the first axial position and offset along the closing direction (X).

6. The closure device (1) according to any of the preceding claims, **characterized in that** the first closure part (2) includes a run-up element (23A, 23B) with a first ramp portion (232), which is arranged on the housing part (20), and the adjusting element (24A, 24B) includes a run-up portion (241) with a second ramp portion (245), wherein during an adjustment of the adjusting element (24A, 24B) for axially adjusting the adjusting element (24A, 24B) the first ramp portion (232) slides on the second ramp portion (245).

7. The closure device (1) according to any of the preceding claims, **characterized in that** the first closure part (2) includes an actuating element (27) which can be actuated in order to adjust the adjusting element (24A, 24B) between the first position and the second position.

8. The closure device (1) according to any of the preceding claims, **characterized in that** the first closure part (2) includes a drive element (26) operatively connected to the adjusting element (24A, 24B), which is configured to introduce an adjusting force into the adjusting element (24A, 24B) on actuation.

9. The closure device (1) according to any of the preceding claims, **characterized in that** the plug-in opening (200A, 200B) is open in an opening direction (Y) directed transversely to the closing direction (X) through an exit opening (201A, 201B), wherein in the first position of the adjusting element (24A, 24B) the engaging element (31A, 31B) can be moved out of the plug-in opening (200A, 200B) in the opening direction (Y) for opening the closure device (1).

10. The closure device (1) according to any of the preceding claims, **characterized in that** the plug-in opening (200A, 200B) includes a center (M1) and the adjusting element (24A, 24B) can be rotated relative to the housing part (20) of the first closure part (2) about an axis of rotation (M2) eccentric to the center (M1) of the plug-in opening (200A, 200B) between the first position and the second position, wherein the adjusting element (24A, 24B) in the second position is configured to produce the engagement between the at least one first engaging protrusion (243) and the at least one second engaging protrusion (310) for holding the first closure part (2) and the second closure part (3) at each other against the closing direction (X).

11. The closure device (1) according to any of the preceding claims, **characterized in that** the first closure part (2) includes a first magnetic element (25A, 25B) and the second closure part (2) includes a second magnetic element (32A, 32B), wherein the first magnetic element (25A, 25B) and the second magnetic element (32A, 32B) cooperate in a magnetically attracting manner in order to magnetically support the attachment of the first closure part (2) and the second closure part (3) for closing the closure device (1).

12. The closure device (1) according to any of the preceding claims, **characterized in that** the first closure part (3) includes two slots with at least one first engaging protrusion (243) each and an adjusting element (24A, 24B) adjustable relative to the housing part (20), wherein the second closure part (3) includes two engaging elements (31A, 31B) with at least one second engaging protrusion (310) each, wherein for closing the closure device (1) each of the engaging elements (31A, 31B) of the second closure part (3) can be attached to one of the slots of the first closure part (2) and in the closed position the first engaging protrusions (243) are in engagement with the second engaging protrusions (310) for holding the first closure part (2) and the second closure part (3) at each other against the closing direction (X).

13. The closure device (1) according to claim 12, **characterized in that** the adjusting elements (24A, 24B) each are arranged on the housing part (20) of the first closure part (2) so as to be adjusted between a first position and a second position and in the second position each are configured to exert a pretensioning force along the closing direction (X) on an associated one of the engaging elements (31A, 31B).

14. The closure device (1) according to claim 12 or 13, **characterized in that** the adjusting elements (24A, 24B) are jointly adjustable via an actuating mechanism of the first closure part (2) or that the adjusting elements (24A, 24B) are adjustable independently of each other.

15. A closure device (1) for connecting two assemblies (4, 5) to each other, comprising,
a first closure part (2) associated to a first one of the assemblies (4, 5), which includes a housing part (20), at least one first engaging protrusion (243) and an adjusting element (24A, 24B) adjustably arranged on the housing part (20), and
a second closure part (2) associated to a second one of the assemblies (4, 5), which includes an engaging element (31A, 31B) with at least one second engaging protrusion (310),
wherein the first closure part (2) and the second closure part (3) can be attached to each other along a closing direction (X) for closing the closure device (1), in a closed position the at least one first engaging protrusion (243) is in engagement with the at least one second engaging protrusion (310) for holding the first closure part (2) and the second closure part (3) at each other against the closing direction (X), and the first closure part (2) and the second closure part (3) can be separated from each other for opening the closure device (1),
wherein the adjusting element (24A, 24B) is arranged on the housing part (20) of the first closure part (2) so as to be adjusted between a first position and a second position, wherein the adjusting element (24A, 24B) in the first position is configured to provide for an attachment of the first closure part (2) and of the second closure part (3) to each other along the closing direction (X) for closing the closure device (1), wherein the adjusting element (24A, 24B), when the first closure part (2) and the second closure part (3) are attached to each other, can be transferred from the first position into the second position in order to exert a pretensioning force along the closing direction (X) on the engaging element (31A, 31B) in the second position,
wherein one of the first closure part (2) and the second closure part (3) includes a bearing pin (300) and the other one of the first closure part (2) and the second closure part (3) includes an engagement opening (202), wherein in the closed position the bearing pin (300) engages into the engagement opening (202) and the first closure part (2) and the second closure part (3) thereby are attached to each other,
wherein for opening the closure device (1) the at least one first engaging protrusion (243) and the at least one second engaging protrusion (310) can be brought out of engagement with each other by pivoting the first closure part (2) and the second closure part (3) relative to each other.

## Revendications

1. Dispositif de fermeture (1) pour relier deux ensembles (4, 5), comprenant
une première partie de fermeture (2) associée à un premier des ensembles (4, 5), qui comporte une partie de boîtier (20), au moins une première saillie d'engagement (243), et un élément de réglage (24A, 24B) agencée sur la partie de boîtier (20) de manière réglable, et
une deuxième partie de fermeture (2) associée à un deuxième des ensembles (4, 5), qui comporte un élément d'engagement (31A, 31B) avec au moins une deuxième saillie d'engagement (310),
dans lequel la première partie de fermeture (2) et la deuxième partie de fermeture (3) peuvent être assemblées l'une à l'autre le long d'une direction de fermeture (X) pour fermer le dispositif de fermeture (1), dans une position de fermeture, ladite au moins une première saillie d'engagement (243) s'engage avec ladite au moins une deuxième saillie d'engagement (310) pour maintenir la première partie de fermeture (2) et la deuxième partie de fermeture (3) l'une à l'autre dans le sens opposé à la direction de fermeture (X), et la première partie de fermeture (2) et la deuxième partie de fermeture (3) peuvent être séparées l'une de l'autre pour ouvrir le dispositif de fermeture (1),
dans lequel l'élément de réglage (24A, 24B) est agencé sur la partie de boîtier (20) de la première partie de fermeture (2) de manière réglable entre une première position et une deuxième position, l'élément de réglage (24A, 24B) étant conçu pour permettre, dans la première position, un assemblage de la première partie de fermeture (2) et de la deuxième partie de fermeture (3) l'une à l'autre le long de la direction de fermeture (X) pour fermer le dispositif de fermeture (1), l'élément de réglage (24A, 24B), lorsque la première partie de fermeture (2) et la deuxième partie de fermeture (3) sont assemblées l'une à l'autre, pouvant être amené de la première position à la deuxième position afin d'exercer, dans la deuxième position, une force de précontrainte le long de la direction de fermeture (X) sur l'élément d'engagement (31A, 31B),
dans lequel la partie de boîtier (20) comporte une ouverture d'insertion (200A, 200B) dans laquelle l'élément d'engagement (31A, 31B) de la deuxième partie de fermeture (3) peut être inséré le long de la direction de fermeture (X) pour fermer le dispositif de fermeture (1).

2. Dispositif de fermeture (1) selon la revendication 1, **caractérisé en ce que** ladite au moins une première saillie d'engagement (243) est agencée sur l'élément de réglage (24A, 24B) et peut être déplacée conjointement avec l'élément de réglage (24A, 24B) par rapport à la partie de boîtier (20).

3. Dispositif de fermeture (1) selon la revendication 1 ou 2, **caractérisé en ce que** l'élément de réglage (24A, 24B) comporte une base (244) et une partie formant collerette (242) moulée de manière rigide sur la base (244) et faisant saillie de la base (244) le long de la direction de fermeture (X).

4. Dispositif de fermeture (1) selon l'une quelconque des revendications précédentes, **caractérisé en ce que** l'élément de réglage (24A, 24B) peut pivoter entre la première position et la deuxième position par rapport à la partie de boîtier (20) de la première partie de fermeture (2).

5. Dispositif de fermeture (1) selon l'une quelconque des revendications précédentes, **caractérisé en ce que** l'élément de réglage (24A, 24B), dans la première position, prend une première position axiale par rapport à la partie de boîtier (20) et, dans la deuxième position, une deuxième position axiale par rapport à la partie de boîtier (20), différente de la première position axiale et décalée le long de la direction de fermeture (X).

6. Dispositif de fermeture (1) selon l'une quelconque des revendications précédentes, **caractérisé en ce que** la première partie de fermeture (2) comporte un élément de butée (23A, 23B) agencé sur la partie de boîtier (20) avec une première section de rampe (232), et l'élément de réglage (24A, 24B) comporte une section de butée (241) avec une deuxième section de rampe (245), la première section de rampe (245) glissant, lors d'un déplacement de l'élément de réglage (24A, 24B) pour le réglage axial de l'élément de réglage (24A, 24B), sur la deuxième section de rampe (245).

7. Dispositif de fermeture (1) selon l'une quelconque des revendications précédentes, **caractérisé en ce que** la première partie de fermeture (2) comporte un élément d'actionnement (27) qui peut être actionné pour déplacer l'élément de réglage (24A, 24B) entre la première position et la deuxième position.

8. Dispositif de fermeture (1) selon l'une quelconque des revendications précédentes, **caractérisé en ce que** la première partie de fermeture (2) comporte un élément d'entraînement (26) relié fonctionnellement à l'élément de réglage (24A, 24B), qui est conçu pour introduire, lors de son actionnement, une force de réglage dans l'élément de réglage (24A, 24B).

9. Dispositif de fermeture (1) selon l'une quelconque des revendications précédentes, **caractérisé en ce que** l'ouverture d'insertion (200A, 200B) débouche, par l'intermédiaire d'une ouverture de sortie (201A, 201B), dans une direction d'ouverture (Y) perpendiculaire à la direction de fermeture (X), l'élément d'engagement (31A, 31B), dans la première position de l'élément de réglage (24A, 24B), pouvant être déplacés dans la direction d'ouverture (Y) pour ouvrir le dispositif de fermeture (1) à partir de l'ouverture d'insertion (X),

10. Dispositif de fermeture (1) selon l'une quelconque des revendications précédentes, **caractérisé en ce que** l'ouverture d'insertion (200A, 200B) présente un centre (M1) et l'élément de réglage (24A, 24B) peut pivoter autour d'un axe de rotation excentrique (M2) par rapport au centre (M1) de l'ouverture d'insertion (200A, 200B) entre la première position et la deuxième position par rapport à la partie de boîtier (20) de la première partie de fermeture (2), l'élément de réglage (24A, 24B) étant conçu pour établir, dans la deuxième position, l'engagement entre ladite au moins une première saillie d'engagement (243) et ladite au moins une deuxième saillie d'engagement (310) pour maintenir la première partie de fermeture (2) et la deuxième partie de fermeture (3) l'une contre l'autre dans le sens opposé à la direction de fermeture (X).

11. Dispositif de fermeture (1) selon l'une quelconque des revendications précédentes, **caractérisé en ce que** la première partie de fermeture (2) comporte un premier élément magnétique (25A, 25B) et la deuxième partie de fermeture (2) comporte un deuxième élément magnétique (32A, 32B), le premier élément magnétique (25A, 25B) et le deuxième élément magnétique (32A, 32B) coopérant par attraction magnétique afin de supporter magnétiquement le rattachement de la première partie de fermeture (2) et de la deuxième partie de fermeture (3) pour fermer le dispositif de fermeture (1).

12. Dispositif de fermeture (1) selon l'une quelconque des revendications précédentes, **caractérisé en ce que** la première partie de fermeture (3) comporte deux emplacements d'insertion comportant chacun au moins une première saillie d'engagement (243) et un élément de réglage (24A, 24B) pouvant être déplacé par rapport à la partie de boîtier (20), la deuxième partie de fermeture (3) comportant deux éléments d'engagement (31A, 31B) comportant chacun au moins une deuxième saillie d'engagement (310), chacun des éléments d'engagement (31A, 31B) de la deuxième partie de fermeture (3) pouvant être assemblée à l'un des emplacements d'insertion de la première partie de fermeture (2) pour fermer le dispositif de fermeture (1) et, en position de fermeture, les premières saillies d'engagement (243) s'engageant avec les deuxièmes saillies d'engagement (310) pour maintenir la première partie de fermeture (2) et la deuxième partie de fermeture (3) l'une contre l'autre dans le sens opposé à la direction de fermeture (X).

13. Dispositif de fermeture (1) selon la revendication 12, **caractérisé en ce que** les éléments de réglage (24A, 24B) sont chacun agencés et conçus de manière à pouvoir être déplacés entre une première position et une deuxième position sur la partie de boîtier (20) de la première partie de fermeture (2), afin d'exercer, dans la deuxième position, une force de précontrainte le long de la direction de fermeture (X) sur l'un des éléments d'engagement (31A, 31B) qui leur est associé.

14. Dispositif de fermeture (1) selon la revendication 12 ou 13, **caractérisé en ce que** les éléments de réglage (24A, 24B) peuvent être déplacés conjointement au moyen d'un mécanisme d'actionnement de la première partie de fermeture (2) ou que les éléments de réglage (24A, 24B) peuvent être déplacés indépendamment les uns des autres.

15. Dispositif de fermeture (1) pour relier deux ensembles (4, 5), comprenant
une première partie de fermeture (2) associée à un premier des ensembles (4, 5), qui comporte une partie de boîtier (20), au moins une première saillie d'engagement (243), et un élément de réglage (24A, 24B) agencée sur la partie de boîtier (20) de manière réglable, et
une deuxième partie de fermeture (2) associée à un deuxième des ensembles (4, 5), qui comporte un élément d'engagement (31A, 31B) avec au moins une deuxième saillie d'engagement (310),
dans lequel la première partie de fermeture (2) et la deuxième partie de fermeture (3) peuvent être assemblées l'une à l'autre le long d'une direction de fermeture (X) pour fermer le dispositif de fermeture (1), dans une position de fermeture, ladite au moins une première saillie d'engagement (243) s'engage avec ladite au moins une deuxième saillie d'engagement (310) pour maintenir la première partie de fermeture (2) et la deuxième partie de fermeture (3) l'une à l'autre dans le sens opposé à la direction de fermeture (X), et la première partie de fermeture (2) et la deuxième partie de fermeture (3) peuvent être séparées l'une de l'autre pour ouvrir le dispositif de fermeture (1),
dans lequel l'élément de réglage (24A, 24B) est agencé sur la partie de boîtier (20) de la première partie de fermeture (2) de manière réglable entre une première position et une deuxième position, l'élément de réglage (24A, 24B) étant conçu pour permettre, dans la première position, un assemblage de la première partie de fermeture (2) et de la deuxième partie de fermeture (3) l'une contre l'autre le long de la direction de fermeture (X) afin de fermer le dispositif de fermeture (1), l'élément de réglage (24A, 24B), lorsque la première partie de fermeture (2) et la deuxième partie de fermeture (3) sont assemblées l'une à l'autre, pouvant être amené de la première position à la deuxième position afin d'exercer, dans la deuxième position, une force de précontrainte le long de la direction de fermeture (X) sur l'élément d'engagement (31A, 31B),
dans lequel l'une des première partie de fermeture (2) et deuxième partie de fermeture (3) comporte un tourillon (300) et l'autre des première partie de fermeture (2) et deuxième partie de fermeture (3) comporte une ouverture d'engagement (202), le tourillon (300) s'engageant dans l'ouverture d'engagement (202) en position de fermeture, et donc la première partie de fermeture (2) et à la deuxième partie de fermeture (3) sont montées l'une à l'autre,
dans lequel, pour ouvrir le dispositif de fermeture (1), ladite au moins une première saillie d'engagement (243) et ladite au moins une deuxième saillie d'engagement (310) peuvent être désengagées les unes des autres par un pivotement de la première partie de fermeture (2) et de la deuxième partie de fermeture (3) l'une par rapport à l'autre.
